(19) Europäisches Patentamt / European Patent Office / Office européen des brevets

(11) **EP 3 352 387 B1**

(12) **EUROPEAN PATENT SPECIFICATION**

(45) Date of publication and mention of the grant of the patent:
**24.02.2021 Bulletin 2021/08**

(51) Int Cl.:
***H04B 10/2543*** *(2013.01)*    ***H04B 10/61*** *(2013.01)*

(21) Application number: **17305067.5**

(22) Date of filing: **23.01.2017**

(54) **DIGITAL MULTI-CHANNEL NONLINEARITY COMPENSATION SCHEME FOR OPTICAL COHERENT COMMUNICATION**

DIGITALES NICHTLINEARES MEHRKANALKOMPENSIERUNGSSCHEMA FÜR OPTISCHE KOHÄRENTE KOMMUNIKATION

SYSTÈME DE COMPENSATION DE NON-LINÉARITÉ NUMÉRIQUE À CANAUX MULTIPLES POUR UNE COMMUNICATION OPTIQUE COHÉRENTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.07.2018 Bulletin 2018/30**

(73) Proprietor: **Alcatel Lucent**
**91620 Nozay (FR)**

(72) Inventors:
• **MARSELLA, Domenico**
  **20871 Vimercate, MB (IT)**
• **GAVIOLI, Giancarlo**
  **20871 Vimercate, MB (IT)**
• **COSTANTINI, Carlo**
  **20871 Vimercate, MB (IT)**
• **RAZZETTI, Luca**
  **20871 Vimercate, MB (IT)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 3 096 470        EP-A2- 2 629 471**
**US-A1- 2015 071 652**

## Description

### Technical Field

This application relates to compensation method and device for use in the field of optical communications, particularly for performing electrical compensation of distortions induced on optical signals caused by fiber nonlinearities during optical transmission in coherent optical communications systems.

### Background

The advent of coherent detection has paved the way for introducing sophisticated digital signal processing techniques for channel equalization and forward error correction in optical communication. Although linear impairments such as chromatic dispersion and polarization effects can be effectively compensated in the digital domain, fiber nonlinear impairments due to the Kerr effect are yet an obstacle for increasing spectral efficiency or reach in high-speed coherent optical systems. Linear and nonlinear impairments are currently handled by digital demodulation and Forward Error Correction (FEC) algorithms, which however fail to discriminate distortions induced by nonlinearities and thus treat these distortions as additive Gaussian noise. This leads to additive sensitivity penalties associated with long-haul transmission.

Over the recent years, different techniques have been proposed to mitigate nonlinearities by means of digital signal processing and demonstrated to be effective toward nonlinear compensation. Due to electrical bandwidth limitations, only intra-channel mitigation schemes have been implemented in DSP circuits. However, intra-channel mitigation effectiveness is drastically reduced when being applied to fully-loaded Wavelength Division Multiplexing (WDM) transmission systems. The use of super-channels, e.g. a multi-channel on a single chip, in the next generation of commercial devices leads the way to further improve system performance by means of Multi-channel Nonlinear Compensation (MNC). The MNC techniques proposed in scientific literature are based on digital back-propagation (DBP), which is unpractical for implementation in a DSP circuit due to its computational complexity.

Accordingly, there is a need to develop a computational efficient algorithm to mitigate both intra- and inter-channel fiber nonlinear distortions, which can be implemented in digital coherent receivers operating at high bit-rates with advanced modulation formats, e.g. PM-QAM modulation formats. A solution which allows performing nonlinear mitigation with reduced computational complexity and a flexible scheme to adapt the receiver to the scenario is required.

EP 3 096 470 A1 discloses a method for preventing nonlinear interference in an optical communication system by pre-distorting an optical signal for transmission over a second optical channel using one or more linear filters to reduce the inter-channel nonlinear interference to a first optical signal of a first optical channel.

US 2015/0071652 A1 discloses a nonlinearity compensating technique for an optical communication system, wherein a parallel array of linear convolutional filters are configured to process a selected set of samples of a signal to generate an estimate of a nonlinear interference field for least partially compensating the nonlinear impairment.

### Summary

The present document proposes a nonlinear compensating scheme for an optical communication system. In particular, the present document discloses apparatuses and methods having the features of the respective independent claims for compensating nonlinear distortions induced on an optical signal during transmission through an optical link.

An aspect of the disclosure relates to a nonlinear compensating apparatus. The apparatus comprises an optical link interface. In general, the optical link interface may be used at a transmitter or a receiver in an optical communication system for receiving/transmitting complex symbols that are associated with an optical signal being transmitted in the optical communication system. Furthermore, such an optical signal may have one or more polarization components to perform a polarization-division-multiplexing (PDM) transmission. An optical signal may also comprise one or more wavelength components to perform a wavelength-division-multiplexing (WDM) transmission. In a WDM system, an optical signal carries different sequences of complex symbols using different wavelengths having different frequencies. Thus, the optical link interface is configured to receive a sequence of first complex symbols $(ax, ay)$ at a first wavelength $(\lambda_a)$ of the optical signal. The proposed apparatus may be applied to systems of single-polarization transmission and PDM transmission. In the case of PDM transmission where the optical signal comprises two polarization components, each of the two polarizations carries a complex symbol sequence. For example, a sequence of first complex symbols $(ax)$ may be carried by a (first) polarization component x at the first wavelength $(\lambda_a)$ of the optical signal, and another sequence of first complex symbols $(ay)$ may be carried by a second polarization component y at the same wavelength. Further, the optical link interface is configured to receive a sequence of second complex symbols $(bx, by)$ at a second wavelength $(\lambda_b)$ of the optical signal. In the case of PDM transmission, a sequence of second complex symbols $(bx)$ may be carried by the (first) polarization component at the second wavelength $(\lambda_b)$ of the optical signal. Another sequence of second complex symbols $(by)$ may be carried by the second polarization component at the second wavelength. It should be noted that the first wavelength ($\lambda_a$) and the second wavelength ($\lambda_b$) have different frequencies.

The apparatus further comprises a symbol processing unit and a filtering unit. In particular, the symbol processing unit is configured to process the second complex symbols (bx, by) using a nonlinear operation. Thereby, processed second complex symbols ($d_b$, $q_b$) may be obtained. Moreover, the filtering unit is configured to linearly filter the nonlinearly processed second complex symbols ($d_b$, $q_b$) to produce a second sequence of filter coefficients ($f^{(ab)}$, $g^{(ab)}$) associated with inter-channel nonlinearity. The apparatus also comprises a perturbation calculating unit and a compensating unit. The perturbation calculating unit is configured to generate a sequence of nonlinear inter-channel perturbation terms (i.e. inter-nonlinear perturbation terms ($\Delta ax_{inter}$, $\Delta ay_{inter}$)) associated with the received first complex symbols (ax, ay). The sequence of inter-nonlinear perturbation terms are generated based on the received first complex symbols (ax, ay) and the processed and linearly filtered second complex symbols (i.e. the second sequence of filter coefficients ($f^{(ab)}$, $g^{(ab)}$)). More specifically, the inter-nonlinear perturbation terms ($\Delta ax_{inter}$, $\Delta ay_{inter}$) may be obtained by filtering the received first complex symbols (ax, ay) using linear filters with coefficients ($f^{(ab)}$, $g^{(ab)}$). The compensating unit is configured to remove the inter-nonlinear perturbation terms ($\Delta ax_{inter}$, $\Delta ay_{inter}$) from the corresponding first complex symbols (ax, ay) to compensate the nonlinear distortions induced on the first complex symbols (ax, ay) at the first wavelength by the second complex symbols (bx, by) at the second wavelength. For example, the compensating unit may be implemented by one or more adders to compensate the nonlinear distortions by subtracting the inter-nonlinear perturbation terms ($\Delta ax_{inter}$, $\Delta ay_{inter}$) from the corresponding first complex symbols (ax, ay).

By this way, the nonlinear distortions caused by the second complex symbols at the second wavelength and induced on the first complex symbols at the first wavelength can be effectively compensated. In other words, the proposed apparatus enables effective compensation for the nonlinear impairments induced by neighboring channels, i.e. inter-channel nonlinearity compensation, thereby improving transmission performance in a WDM system. For example, the disclosure proposes a scheme for nonlinear compensation between N signals with different frequencies (e.g. N WDM signals), which outperforms existing schemes that only enables nonlinear compensation between two signals with the same frequency. It is also appreciated that at least some parts of the proposed apparatus (such as the symbol processing unit, the filtering unit, the perturbation calculating unit and/or the compensating unit) may be implemented in a processor, e.g. a digital signal processor (DSP).

According to some embodiments, the filtering unit may be configured to provide the second sequence of filter coefficients ($f^{(ab)}$, $g^{(ab)}$), i.e. a sequence of the linearly filtered second complex symbols ($f^{(ab)}$, $g^{(ab)}$). In particular, the sequence of the linearly filtered second complex symbols ($f^{(ab)}$, $g^{(ab)}$), i.e. the second sequence of filter coefficients, may be calculated as a weighted sum of the nonlinearly processed second complex symbols ($d_b$, $q_b$) by using a set of filtering coefficients ($D^{(ab)}$) as weights of the weighted sum. It should be noted that the filtering coefficients ($D^{(ab)}$) may be associated with an inter-nonlinear perturbation. Furthermore, the set of filtering coefficients ($D^{(ab)}$) may be predetermined according to a configuration of the optical link (e.g. a link type, dispersion maps, etc.). For example, the set of filtering coefficients ($D^{(ab)}$) may be provided according to a look-up table. More specifically, a look-up table may be provided for selecting the set of filtering coefficients ($D^{(ab)}$) based on link configuration information. In some embodiments, the sequence of inter-nonlinear perturbation terms ($\Delta ax_{inter}$, $\Delta ay_{inter}$) may be calculated as a weighted sum of the received first complex symbols (ax, ay) by using the linearly filtered second complex symbols, i.e. the second sequence of filter coefficients ($f^{(ab)}$, $g^{(ab)}$), as weights of the weighted sum.

It is thus appreciated that the calculation of the sequence of inter-nonlinear perturbation terms ($\Delta ax_{inter}$, $\Delta ay_{inter}$) may perform a similar procedure as the calculation of the sequence of the linearly filtered second complex symbols ($f^{(ab)}$, $g^{(ab)}$). That is, the sequence of inter-nonlinear perturbation terms ($\Delta ax_{inter}$, $\Delta ay_{inter}$) may be regarded as a result of linearly filtering the linearly filtered second complex symbols ($f^{(ab)}$, $g^{(ab)}$). By properly selecting the filtering coefficients ($D^{(ab)}$) and considering the influence of the symbols/samples from neighboring channels (bx, by), inter-channel nonlinearity can be optimally compensated.

According to some embodiments, the symbol processing unit may be further configured to process the first complex symbols (ax, ay) using a nonlinear operation. In this case, the filtering unit may be further configured to linearly filter the processed first complex symbols ($d_a$, $q_a$) to produce a first sequence of filter coefficients ($f^{(aa)}$, $g^{(aa)}$) associated with intra-channel nonlinearity. Furthermore, the perturbation calculating unit may be configured to generate a sequence of intra-nonlinear perturbation terms ($\Delta ax_{intra}$, $\Delta ay_{intra}$) associated with the received first complex symbols (ax, ay) based on the received first complex symbols (ax, ay) and the processed and linearly filtered first complex symbols, i.e. the first sequence of filter coefficients ($f^{(aa)}$, $g^{(aa)}$). Also, the compensating unit may be configured to remove the intra-nonlinear perturbation terms ($\Delta ax_{intra}$, $\Delta ay_{intra}$) from the corresponding first complex symbols (ax, ay) to compensate the nonlinear distortions induced on the first complex symbols (ax, ay) by the first complex symbols (ax, ay). In this manner, intra-channel nonlinearity can be effectively compensated.

In detail, the filtering unit may be further configured to provide a sequence of the linearly filtered first complex symbols, i.e. the first sequence of filter coefficients ($f^{(aa)}$, $g^{(aa)}$). in particular, the first sequence of filter coefficients (the sequence of the linearly filtered first complex symbols) ($f^{(aa)}$, $g^{(aa)}$) may be calculated as a weighted sum of the processed first complex symbols ($d_a$, $q_a$) by using a set of filtering coefficients (C) as weights of the weighted sum. It should be noted that the filtering coefficients (C) may be associated with a nonlinear intra-channel perturbation (i.e. intra-nonlinear perturbation). Similar to the above mentioned set of filtering coefficients ($D^{(ab)}$), the set of filtering coefficients (C) may be predetermined according to a configuration of the optical link (e.g. a link type, dispersion maps, etc.). For example, the set of filtering coefficients (C) may be provided according to a look-up table. More specifically, a look-up table may be provided for selecting the set of filtering coefficients (C) based on link configuration information. In some embodiments, the sequence of intra-nonlinear perturbation terms ($\Delta ax_{intra}$, $\Delta ay_{intra}$) may be calculated as a weighted sum of the received first complex symbols (ax, ay) by using the linearly filtered first complex symbols (the first sequence of filter coefficients) ($f^{(aa)}$, $g^{(aa)}$) as weights of the weighted sum.

By this way, additional nonlinear distortions caused by the first complex symbols at the first wavelength and induced on the first complex symbols themselves can be jointly compensated. In other words, the proposed apparatus enables effective compensation for the nonlinear impairments induced by neighboring channels and by a current channel itself, i.e. compensation for inter-channel and intra-channel nonlinearities, thereby improving transmission performance in a WDM system. It is further appreciated that the calculation of the sequence of intra-nonlinear perturbation terms ($\Delta ax_{intra}$, $\Delta ay_{intra}$) may perform a similar procedure as the calculation of the first sequence of filter coefficients (the sequence of the linearly filtered first complex symbols) ($f^{(aa)}$, $g^{(aa)}$). That is, the sequence of intra-nonlinear perturbation terms ($\Delta ax_{intra}$, $\Delta ay_{intra}$) may be regarded as a result of linearly filtering the linearly filtered first complex symbols ($f^{(aa)}$, g(aa)). By further properly selecting the filtering coefficients (C) and considering the influence of the symbols/samples from neighboring channels (bx, by) and a current channel (ax, ay), joint compensation for inter-channel and intra-channel nonlinearities can be effectively performed.

According to some embodiments, the filtering unit may comprise a FIR filter configured to linearly filter the processed first complex symbols ($d_a$, $q_a$) and/or the processed second complex symbols ($d_b$, $q_b$) in a frequency domain. More specifically, the filtering unit may further comprise a fast Fourier transform (FFT) operation unit to be applied to the first complex symbols and/or the second complex symbols prior to linear filtering. The filtering unit may further comprise an inverse fast Fourier transform (IFFT) operation unit to be applied to the first complex symbols and/or the second complex symbols after linear filtering. In order to further enhance computational efficiency, the first sequence of filter coefficients (i.e. the linearly filtered first complex symbols) ($f^{(aa)}$, $g^{(aa)}$) and the second sequence of filter coefficients (i.e. the linearly filtered second complex symbols) ($f^{(ab)}$, $g^{(ab)}$) may be summed up prior to applying the IFFT operation for reducing the number of FFT/IFFT operations.

According to some embodiments, polarization division multiplexing (PDM) may be considered. As mentioned above, in a PDM system, an optical signal carries different sequences of complex symbols using different polarizations. In this case, the proposed apparatus may be configured to receive and process an optical polarization-division-multiplexed (PDM) signal having a (first) polarization component and another (second) polarization component. Thus, the optical link interface may be configured to further receive another sequence of first complex symbols (ay) carried by another (second) polarization component at the first wavelength ($\lambda_a$) of the optical signal. Also, the optical link interface may be configured to receive another sequence of second complex symbols (by) carried by the another (second) polarization component at the second wavelength ($\lambda_b$) of the optical signal. In this case, the symbol processing unit may be configured to further process, using a nonlinear operation, the second complex symbols (by) carried by the another polarization component at the second wavelength of the optical signal. Further, the filtering unit may be configured to further linearly filter the processed second complex symbols ($q_b$) carried by the another polarization component at the second wavelength of the optical signal to produce another second sequence of filer coefficients ($g^{(ab)}$) associated with inter-channel nonlinearity for the another (second) polarization component.

In some embodiments, the perturbation calculating unit may be configured to further generate another sequence of inter-nonlinear perturbation terms ($\Delta ay_{inter}$) associated with the received first complex symbols (ay) of the another polarization component based on the received first complex symbols (ay) and the processed and linearly filtered second complex symbols of the another polarization component (i.e. the another second sequence of filter coefficients ($g^{(ab)}$) of the another polarization component). In some embodiments, the compensating unit may be configured to further remove the inter-nonlinear perturbation terms ($\Delta ay_{inter}$) associated with the another polarization component from the corresponding first complex symbols (ay) of the another polarization component to compensate the nonlinear distortions induced on the first complex symbols (ay) of the another polarization component by the second complex symbols (bx) carried by the polarization component and the second complex symbols (by) carried by the another polarization component. In this case, the inter-nonlinear perturbation terms ($\Delta ax_{inter}$) associated with the polarization component may also be removed from the corresponding first complex symbols (ax) of the polarization component to compensate the nonlinear distortions induced on the first complex symbols (ax) of the polarization component by the second complex symbols (bx, by) carried by the polarization component and the another polarization component.

In particular, the symbol processing unit may be configured to calculate the processed second complex symbols ($d_b$, $q_b$) of the (first) polarization component and the another (second) polarization component by carrying out a nonlinear operation on the second complex symbols (bx, by) of the (first) polarization component and the another (second) polarization component, so that the processed second complex symbols ($d_b$) of the (first) polarization component and the processed second complex symbols ($q_b$) of the another (second) polarization component satisfy a nonlinear relationship with the second complex symbols (bx, by) as:

$$d_{b,t} = 2bx_t bx_{t-n}* + by_t by_{t-n}*, \quad q_{b,t} = 2by_t by_{t-n}* + bx_t bx_{t-n}*.$$

where "*" denotes an operator of complex conjugation. Furthermore, the symbol processing unit may be configured to calculate the processed first complex symbols ($d_a$, $q_a$) of the (first) polarization component and the another (second) polarization component by carrying out a nonlinear operation on the first complex symbols (ax, ay) of the (first) polarization component and the another (second) polarization component, so that the processed first complex symbols ($d_a$, $q_a$) of the (first) polarization component and the another (second) polarization component satisfy a nonlinear relationship with the first complex symbols (ax, ay) as:

$$d_{a,t} = 2ax_t ax_{t-n}* + ay_t ay_{t-n}*, \quad q_{a,t} = 2ay_t ay_{t-n}* + ax_t ax_{t-n}*.$$

Herein, the complex symbols (ax, ay) and (bx, by) may refer to a PDM signal having a (first) polarization component and another (second) polarization component, where the symbols ax, bx may be sent on a (first) polarization H, and the symbols ay, by may be sent on a (second) polarization V. It should be noted that the symbols (ax, ay) may be carried by different polarization components at the same optical wavelength $\lambda_a$. Similarly, the symbols (bx, by) may be carried by different polarization components at the same optical wavelength $\lambda_b$.

By this way, effective compensation for the nonlinear impairments induced by neighboring channels and by a current channel itself, i.e. compensation for inter-channel and intra-channel nonlinearities, can be achieved for one or more polarizations to improve transmission performance in a WDM-PDM system.

As indicated above, in addition to a PDM system, the disclosed compensating apparatus can be also applied to other types of optical communication systems such as single-polarization transmission. The skilled person will appreciate that for the case of single-polarization transmission, $d_{a,b}$ and $q_{a,b}$ as well as $\Delta ax$ and $\Delta ay$ may be computed differently, in particular, by removing the terms referring to cross polarization. It should be noted that the single polarization case is a special case of the general PDM transmission, in which, the cross terms shall be omitted for the computation (e.g. in formula of db,t, term for x-polarization, $by_t by_{t-n}*$ is not present for calculation).

It is further appreciated that the signals/symbols of the two wavelengths ($\lambda_a$, $\lambda_b$) are processed (filtered) independently and contribution between the two wavelengths is introduced by the computation of the filter coefficients (i.e. by computing the weighted sum of the received first complex symbols (ax, ay) by using the linearly filtered second complex symbols ($f^{(ab)}$, $g^{(ab)}$) by using as weights of the weighted sum). The computational complexity for the inter-channel nonlinearity compensation can be therefore reduced.

In some embodiments, the optical link interface may be further configured to receive a sequence of third complex symbols (cx, cy) at a third wavelength ($\lambda_c$) of the optical signal. In this case, the symbol processing unit may be configured to further process the third complex symbols (cx, cy) using a nonlinear operation. Also, the filtering unit may be configured to further linearly filter the processed third complex symbols ($d_c$, $q_c$) to produce a third sequence of filter coefficients ($f^{(ac)}$, $g^{(ac)}$) associated with inter-channel nonlinearity. In some embodiments, the perturbation calculating unit may be further configured to generate a sequence of inter-nonlinear perturbation terms ($\Delta ax_{inter}$, $\Delta ay_{inter}$) associated with the received first complex symbols (ax, ay) based on the received first complex symbols (ax, ay) and the processed and linearly filtered third complex symbols, i.e. the third sequence of filter coefficients ($f^{(ac)}$, $g^{(ac)}$). Moreover, the compensating unit may be further configured to remove the inter-nonlinear perturbation terms ($\Delta ax_{inter}$, $\Delta ay_{inter}$) from the corresponding first complex symbols (ax, ay) to compensate the nonlinear distortions induced on the first complex symbols (ax, ay) by the third complex symbols (cx, cy). As such, the influence of two or more neighboring channels can be taken into account for inter-channel nonlinearity compensation.

It is appreciated that the proposed compensating apparatus is applicable to multi-wavelength systems having arbitrary number N of channels/wavelengths. This is possible because the wavelengths can be processed independently so that the computational complexity is limited.

Another aspect of the disclosure relates to a nonlinear compensating method for compensating nonlinear distortions induced on an optical signal during transmission through an optical link. Similar to the proposed apparatus as described above, the proposed method may be applied to systems of single-polarization transmission and PDM transmission. In the case of PDM transmission where the optical signal comprises two polarization components, the method comprises receiving a sequence of first complex symbols (ax) carried by a (first) polarization component and another sequence of first complex symbols (ay) carried by another (second) polarization component, at a first wavelength ($\lambda_a$) of the optical signal. Also, the method comprises receiving a sequence of second complex symbols (bx) carried by the (first) polarization component and another sequence of second complex symbols (by) carried by the second polarization component, at a second wavelength ($\lambda_b$) of the optical signal. The method further comprises processing the second complex symbols (bx, by) using a nonlinear operation, thereby obtaining processed second complex symbols ($d_b$, $q_b$). The method comprises linearly filtering the processed second complex symbols ($d_b$, $q_b$) to produce a second sequence of filter coefficients ($f^{(ab)}$, $g^{(ab)}$) associated with inter-channel nonlinearity. Moreover, the method comprises generating a sequence of inter-nonlinear perturbation terms ($\Delta ax_{inter}$, $\Delta ay_{inter}$) associated with the received first complex symbols (ax, ay) based on the received first complex symbols (ax, ay) and the processed and linearly filtered second complex symbols, i.e. the second sequence of filter coefficients ($f^{(ab)}$, $g^{(ab)}$). Furthermore, the method comprises removing the inter-nonlinear perturbation terms ($\Delta ax_{inter}$, $\Delta ay_{inter}$) from the corresponding first complex symbols (ax, ay) to compensate the nonlinear distortions induced on the first complex symbols (ax, ay) by the second complex symbols (bx, by).

According to some embodiments, the method may further comprise providing a sequence of the linearly filtered second complex symbols, the second sequence of filter coefficients ($f^{(ab)}$, $g^{(ab)}$). In particular, the sequence of the linearly filtered second complex symbols (the second sequence of filter coefficients ($f^{(ab)}$, , $g^{(ab)}$)) may be calculated as a weighted sum of the processed second complex symbols ($d_b$, $q_b$) by using a set of filtering coefficients ($D^{(ab)}$) as weights of the weighted sum. It should be noted that the filtering coefficients ($D^{(ab)}$) may be associated with an inter-nonlinear perturbation. For example, the set of filtering coefficients ($D^{(ab)}$) may be provided according to a look-up table. In some embodiments, the sequence of inter-nonlinear perturbation terms ($\Delta ax_{inter}$, $\Delta ay_{inter}$) may be calculated as a weighted sum of the received first complex symbols (ax, ay) using the linearly filtered second complex symbols (the second sequence of filter coefficients ($f^{(ab)}$, $g^{(ab)}$)) as weights of the weighted sum.

According to some embodiments, the method may further comprise processing the first complex symbols (ax, ay) using a nonlinear operation and linearly filtering the processed first complex symbols ($d_a$, $q_a$) to produce a first sequence of filter coefficients ($f^{(aa)}$, $g^{(aa)}$) associated with intra-channel nonlinearity. The method may comprise generating a sequence of intra-nonlinear perturbation terms ($\Delta ax_{intra}$, $\Delta ay_{intra}$) associated with the received first complex symbols (ax, ay) based on the received first complex symbols (ax, ay) and the processed and linearly filtered first complex symbols, i.e. the first sequence of filter coefficients ($f^{(aa)}$, $g^{(aa)}$). The method may also comprise removing the intra-nonlinear perturbation terms ($\Delta ax_{intra}$, $\Delta ay_{intra}$) from the corresponding first complex symbols (ax, ay) to compensate the nonlinear distortions induced on the first complex symbols (ax, ay) by the first complex symbols (ax, ay).

In some embodiments, the method may further comprise providing a sequence of the linearly filtered first complex symbols, i.e. the first sequence of filter coefficients ($f^{(aa)}$, $g^{(aa)}$). In particular, the sequence of the linearly filtered first complex symbols ($f^{(aa)}$, $g^{(aa)}$) may be calculated as a weighted sum of the processed first complex symbols ($d_a$, $q_a$) by using a set of filtering coefficients (C) as weights of the weighted sum. As mentioned above, the filtering coefficients (C) may be associated with an intra-nonlinear perturbation. In some embodiments, the sequence of intra-nonlinear perturbation terms ($\Delta ax_{intra}$, $\Delta ay_{intra}$) may be calculated as a weighted sum of the received first complex symbols (ax, ay) by using the linearly filtered first complex symbols ($f^{(aa)}$, $g^{(aa)}$) as weights of the weighted sum.

As indicated above, the processed first complex symbols ($d_a$, $q_a$) and/or the processed second complex symbols ($d_b$, $q_b$) may be linearly filtered in a frequency domain. Accordingly, the method may further comprise applying a fast Fourier transform (FFT) operation to the first complex symbols and/or the second complex symbols prior to the linearly filtering and applying an inverse fast Fourier transform (IFFT) operation to the first complex symbols and/or the second complex symbols after the linearly filtering. In some embodiments, the method may further comprise summing up the linearly filtered first complex symbols, i.e. the first sequence of filter coefficients ($f^{(aa)}$, $g^{(aa)}$), and the linearly filtered second complex symbols, i.e. the second sequence of filter coefficients ($f^{(ab)}$, $g^{(ab)}$) prior to applying the IFFT operation.

According to some embodiments, the method may also comprise receiving another sequence of first complex symbols (ay) carried by another (second) polarization component at the first wavelength ($\lambda_a$) of the optical signal. The method may also comprise receiving another sequence of second complex symbols (by) carried by the another (second) polarization component at the second wavelength ($\lambda_b$) of the optical signal. The method may comprise processing, using a nonlinear operation, the second complex symbols (by) carried by the another polarization component at the second wavelength of the optical signal. The method may further comprise linearly filtering the processed second complex symbols ($q_b$) carried by the another polarization component at the second wavelength of the optical signal to produce another second sequence of filter coefficients ($g^{(ab)}$) associated with inter-channel nonlinearity for the another polarization component.

According to the disclosure, the method may further comprise generating another sequence of inter-nonlinear perturbation terms ($\Delta ay_{inter}$) associated with the received first complex symbols (ay) of the another polarization component based on the received first complex symbols (ay) and the processed and linearly filtered second complex symbols ($g^{(ab)}$) of the another polarization component, i.e. the another second sequence of filter coefficients. Furthermore, the method may comprise removing the inter-nonlinear perturbation terms ($\Delta ay_{inter}$) associated with the another polarization component from the corresponding first complex symbols (ay) of the another polarization component to compensate the nonlinear distortions induced on the first complex symbols (ay) of the another polarization component by the second complex symbols (bx) carried by the polarization component and the second complex symbols (by) carried by the another polarization component. In this case, the inter-nonlinear perturbation terms ($\Delta ax_{inter}$) associated with the polarization component may also be removed from the corresponding first complex symbols (ax) of the polarization component to compensate the nonlinear distortions induced on the first complex symbols (ax) of the polarization component by the second complex symbols (bx, by) carried by the polarization component and the another polarization component.

In some embodiments, the processed second complex symbols ($d_b$, $q_b$) of the (first) polarization component and the (second) another polarization component may be calculated by carrying out a nonlinear operation on the second complex symbols (bx, by) of the (first) polarization component and the (second) another polarization component, so that the processed second complex symbols ($d_b$) of the (first) polarization component and the processed second complex symbols ($q_b$) of the (second) another polarization component satisfy a nonlinear relationship with the second complex symbols (bx, by) as:

$$d_{b,t} = 2bx_tbx_{t-n}* + by_tby_{t-n}*, \ q_{b,t} = 2by_tby_{t-n}* + bx_tbx_{t-n}*.$$

According to some embodiments, the method may further comprise receiving a sequence of third complex symbols (cx, cy) at a third wavelength ($\lambda_c$) of the optical signal. The method may comprise processing the third complex symbols (cx, cy) using a nonlinear operation. Additionally, the method may comprise linearly filtering the processed third complex symbols ($d_c$, $q_c$) to produce a third sequence of filter coefficients ($f^{(ac)}$, $g^{(ac)}$) associated with inter-channel nonlinearity. The method may also comprise generating a sequence of inter-nonlinear perturbation terms ($\Delta ax_{inter}$, $\Delta ay_{inter}$) associated with the received first complex symbols (ax, ay) based on the received first complex symbols (ax, ay) and the processed and linearly filtered third complex symbols, i.e. the third sequence of filter coefficients ($f^{(ac)}$, $g^{(ac)}$). The method may further comprise removing the inter-nonlinear perturbation terms ($\Delta ax_{inter}$, $\Delta ay_{inter}$) from the corresponding first complex symbols (ax, ay) to compensate the nonlinear distortions induced on the first complex symbols (ax, ay) by the third complex symbols (cx, cy).

Accordingly, the proposed method enables effective compensation for the nonlinear impairments induced by neighboring channels, i.e. inter-channel nonlinearity compensation, as well as by a current channel, i.e. intra-channel nonlinearity compensation, thereby improving transmission performance in a WDM system. It is appreciated that the influence of two or more neighboring channels can be taken into account for inter-channel nonlinearity compensation.

Furthermore, such joint compensation for inter-channel and intra-channel nonlinearities can be also achieved for one or more polarizations to improve transmission performance in a WDM-PDM system. By properly selecting the filtering coefficients for the inter- and intra- nonlinear perturbations, inter-channel and intra-channel nonlinearities can be optimally compensated.

It is also appreciated that at least some steps of the proposed method (such as the processing step, the filtering step, the generating step and/or the removing step) may be implemented in a processor, e.g. a digital signal processor (DSP)

Another aspect of the disclosure relates to a transmitter for an optical coherent transmission system comprising the above mentioned apparatus for compensating nonlinear distortions. Another aspect of the disclosure relates to a receiver for an optical coherent transmission system comprising the above mentioned apparatus for compensating nonlinear distortions. A further aspect of the disclosure relates to a computer program product to be run on a computer. The computer program product comprises computer-executable instructions for performing the steps of the above mentioned method.

The above presented compensating apparatus and method may be implemented in a transmitter and/or a receiver for coherent optical data communications. For example, the transmitter/receiver may be employed in a WDM-PDM communication network, but is not restricted to WDM-PDM and can be applied in other optical transmission networks.

Implementations of the devices may include using, but not limited to, one or more processor, one or more application specific integrated circuit (ASIC) and/or one or more field programmable gate array (FPGA). Implementations of the apparatus may also include using other conventional and/or customized hardware such as software programmable processors.

It will be appreciated that method steps and device features may be interchanged in many ways. In particular, the details of the disclosed device can be implemented as a method and vice versa, as the skilled person will appreciate.

**Brief Description of the Figures**

Some embodiments of apparatus and/or methods in accordance with embodiments of the present invention are now described, by way of example only, and with reference to the accompanying drawings, in which:

**Fig. 1(a)** shows a schematic illustration of a WDM spectrum of a three channel transmission;

**Fig. 1(b)** schematically illustrates a circuit block diagram example for PNC;

**Fig. 2(a)** graphically illustrates an example of a magnitude of the coefficients $C_{m,n}$ for a link scenario;

**Fig. 2(b)** graphically illustrates an example of cross-domain restriction function for the computation of a magnitude of the perturbation coefficient $C_{m,n}$;

**Fig. 3** schematically illustrates a circuit block diagram example for the computation of the perturbation terms;

**Fig. 4(a)** schematically illustrates an example of block diagram for PMNC according to embodiments of the disclosure;

**Fig. 4(b)** graphically illustrates an example of a magnitude of the coefficients $D_{m,n}$ for a link configuration;

**Fig. 4(c)** schematically illustrates an example of block diagram for implementing PMNC according to embodiments of the disclosure;

**Fig. 5** schematically illustrates an example of block diagram for PMNC according to embodiments of the disclosure;

**Fig. 6** graphically illustrates performance of PMNC for a dispersion-unmanaged coherent link with lumped amplification according to embodiments of the disclosure;

**Fig. 7(a)** schematically illustrates a transmitter DSP chain including PMNC according to embodiments of the disclosure;

**Fig. 7(b)** schematically illustrates a receiver DSP chain including PMNC according to embodiments of the disclosure;

**Fig. 8** illustrates processing steps for the proposed compensating method according to embodiments of the disclosure.

## Detailed Description

A basic aspect of this disclosure relates to a compensating apparatus and method for use in an optical communication system. In particular, the proposed apparatus and method implement a computational efficient algorithm in an optical coherent transmission system for compensating nonlinear distortions induced on an optical signal during transmission through an optical link.

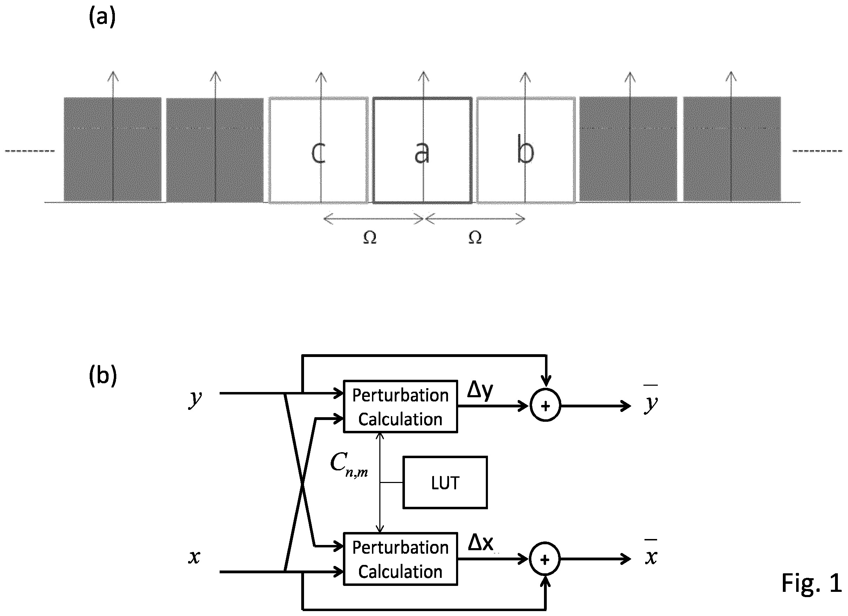

As known, fiber nonlinear impairments can be divided into two deterministic effects: intra-channel (Self-Phase Modulation, SPM) and inter-channel (Cross-Phase Modulation, XPM, and Four-Wave Mixing, FWM) nonlinear effects. Fig. 1(a) shows a schematic illustration of a WDM spectrum of a three channel transmission. Assuming channel "a" to be the reference signal and considering a dedicated receiver for each channel, intra-channel nonlinear distortion is induced by the interaction between channel "a" on itself during propagation, while, inter-channel nonlinear interference is caused by the beating of channel "a" with any other channel constituting the WDM spectrum. Intra-channel nonlinear interference is a deterministic effect and it can be mitigated by one of the strategies as explained below. Although inter-channel nonlinear interference can be modeled by the Gaussian noise model as additive noise, if the channel of interest has access to the interference channel information, inter-channel nonlinear interference can also be considered as a deterministic impairment and thus can be mitigated. An approach for implementing digital nonlinear intra-channel compensation is the perturbation-based nonlinear compensator (PNC) based regular perturbation (RP) model which may perform equivalently to Volterra series transfer function (VSTN).

PNC involves calculating the perturbation terms associated with intra-channel nonlinearities and then subtract these from either the received or transmitted signal. Although PNC could be used iteratively, a single-stage PNC scheme is considered to represent one of the main advantage of PNC implementation. The perturbation terms can be expressed analytically in a closed form even for a multi-span transmission. In detail, the perturbation terms $\Delta x$ and $\Delta y$ acting on the two polarization x and y can be expressed as:

$$\begin{cases} \Delta_x(t) = \sum_{m=-N}^{N} \sum_{n=-N}^{N} \left( x_{t-m} x_{t-n} x_{t-m-n}^* + y_{t-m} x_{t-n} y_{t-m-n}^* \right) C_{m,n} \\ \Delta_y(t) = \sum_{m=-N}^{N} \sum_{n=-N}^{N} \left( y_{t-m} y_{t-n} y_{t-m-n}^* + x_{t-m} y_{t-n} x_{t-m-n}^* \right) C_{m,n} \end{cases} \tag{1}$$

where $C_{m,n}$ are the perturbation coefficients, $x_{t-m}$ and $y_{t-m}$ are the symbols/samples transmitted/received in a $(t$-$m)$-th time-slot on x and y polarizations, respectively. **Fig. 1(b)** shows the block diagram for a nonlinear equalizer which comprises the circuit for the computation of the perturbation terms for each polarization following Equation (1), a look-up table (LUT) for the computation of the $C_{m,n}$ coefficients and an adder to combine the nonlinear term with the corresponding symbol. The perturbation coefficients $C_{m,n}$ depend on the link configuration and can be stored in a quasi-static LUT after offline calculation or estimation by means of a Least Mean Square (LMS) algorithm. The computational complexity of the PNC is mainly dependent on the size of the symbol indices m and n which define the number of terms included in the perturbation calculation of the running double sum term in Equation (1). Although the perturbation calculation equation contains infinite terms as m and n approach infinity, experimental investigations have demonstrated that truncation to m=n=100 terms leads to negligible performance penalties at maximum reach. Under this condition, the running double sum would still require about 40000 operations per output complex sample, which would be orders of magnitude larger with respect to a linear equalizer used for chromatic dispersion compensation.

An efficient implementation of intra-channel PNC has been proposed in EP 15306613.9. The computation of the nonlinear channel response can be realized with a combination of linear filters operating over a restricted number of interacting symbols. On this basis, it becomes feasible to design an equalizer for the mitigation of intra-channel fiber distortion, which allows for significant reduction of computational complexity with respect to the reference scheme at negligible performance costs. Notably, Equation (1) can be re-arranged to express it as weighted sum of digital linear filters:

$$\Delta_x(t) = \sum_{n=-N}^{N} \sum_{m=-N}^{N} \left( x_{t-m} x_{t-n} x_{t-m-n}^* + y_{t-m} x_{t-n} y_{t-m-n}^* \right) C_{m,n} = \sum_{n=-N}^{N} x_{t-n} \sum_{m=-N}^{N} d_{t-m}^{(n)} C_{m,n}$$

$$\Delta_y(t) = \sum_{n=-N}^{N} \sum_{m=-N}^{N} \left( y_{t-m} y_{t-n} y_{t-m-n}^* + x_{t-m} y_{t-n} x_{t-m-n}^* \right) C_{m,n} = \sum_{n=-N}^{N} y_{t-n} \sum_{m=-N}^{N} d_{t-m}^{(n)} C_{m,n}$$

$$d_t^{(n)} = x_t x_{t-n}^* + y_t y_{t-n}^*$$

$$(2)$$

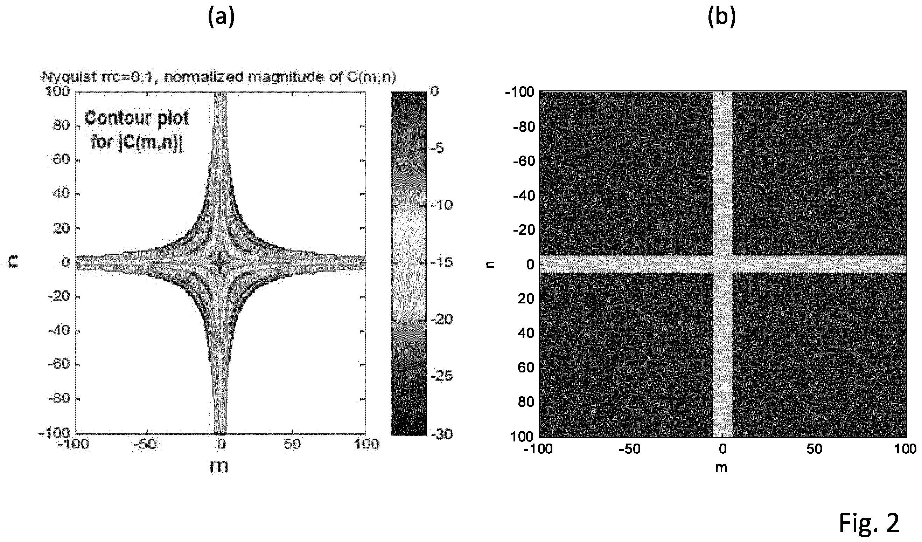

where the running double sum term is computed in three steps involving: 1. generating dt (i.e. products of symbol samples at time instances t and t-n), 2. applying N+1 linear filters operating in parallel and 3. applying weighted sum of the filter outputs. **Fig. 2(a)** shows an example of the perturbation coefficients for a typical link scenario. Since the strongest contribution lies in the centre cross of the $C_{m,n}$ plane, a further complexity reduction can be achieved by considering a cross-domain restriction of the perturbation coefficients, as shown in **Fig. 2(b).** In detail, the nonlinear coefficients $C_{m,n}$ are subjected to a domain restriction as shown in **Fig. 2(b),** meaning that a certain area is identified in the [n, m] plane, which comprises the nonlinear coefficients $C_{m,n}$ whose value is less significant and is accordingly set equal to zero (see the bright cross strips of **Fig. 2(b)).** In order to account a cross-domain with a strip-size of K, Equation (2) has been rewritten as:

$$\begin{cases} \Delta_x(t) = \sum_{n=-K}^{K} \left( x_{t-n} \sum_{m=-N}^{N} \left( 2x_{t-m} x_{t-m-n}^* + y_{t-m} y_{t-m-n}^* \right) C_{m,n} + y_{t-n} \sum_{m=-N}^{N} \left( x_{t-m} y_{t-m-n}^* \right) C_{m,n} \right) \\ \Delta_y(t) = \sum_{n=-K}^{K} \left( y_{t-n} \sum_{m=-N}^{N} \left( 2y_{t-m} y_{t-m-n}^* + x_{t-m} x_{t-m-n}^* \right) C_{m,n} + x_{t-n} \sum_{m=-N}^{N} \left( y_{t-m} x_{t-m-n}^* \right) C_{m,n} \right) \end{cases} \tag{3}$$

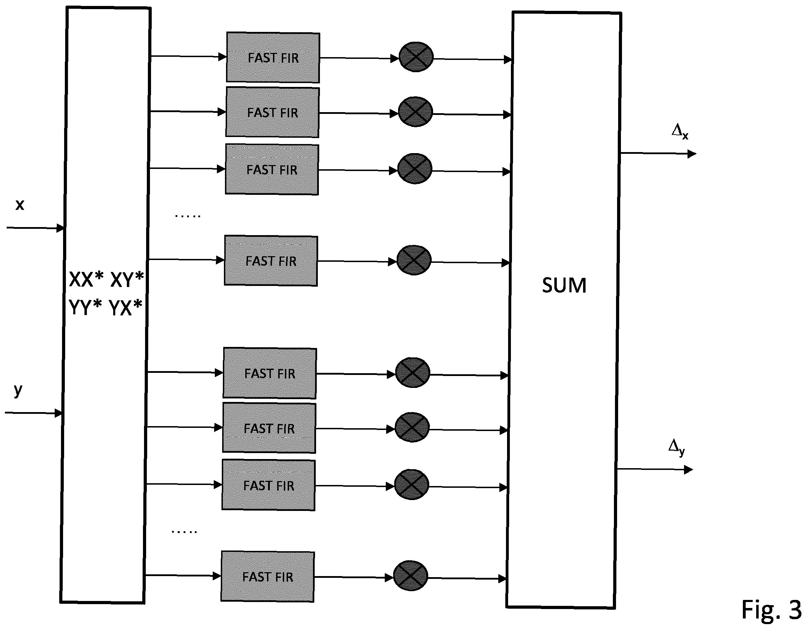

where the circuit complexity for the computation of perturbation terms is reduced to 4K + 2 linear filters. This algorithm for calculating the perturbation terms can be implemented based on a circuit block diagram as illustrated in **Fig. 3,** as proposed in EP 15306613.9.

Referring to the WDM spectrum as illustrated in **Fig. 1(a),** the nonlinear interference on channel "a" due to channels "b" and "c" can be modeled by the RP model. Thus, the received signal samples (one or more samples for a complex symbol) in the two polarizations can be expressed as:

$$\mathbf{r}_k = \mathbf{a}_k + \Delta\mathbf{a}_k + \mathbf{n}_k = \mathbf{a}_k + \sum_{m,n,l} \mathbf{S}_{m,n,l}\, \mathbf{a}_{k-l}^{H}\mathbf{a}_{k-n}\mathbf{a}_{k-m}$$

$$+ \sum_{m,n,l} \mathbf{X}_{m,n,l}^{(ab)}\left(\mathbf{b}_{k-l}^{H}\mathbf{b}_{k-n}\mathbf{I} + \mathbf{b}_{k-n}\mathbf{b}_{k-l}^{H}\right)\mathbf{a}_{k-m} + \sum_{m,n,l} \mathbf{X}_{m,n,l}^{(ac)}\left(\mathbf{c}_{k-l}^{H}\mathbf{c}_{k-n}\mathbf{I} + \mathbf{c}_{k-n}\mathbf{c}_{k-l}^{H}\right)\mathbf{a}_{k-m} + \mathbf{n}_k$$

(4)

where $a_k = [ax_k, ay_k]$, $b_k = [bx_k, by_k]$, $c_k = [cx_k, cy_k]$ are the k-th index data symbols on the channel "a", "b" and "c", respectively.

The term $\Delta a_k$ represents the nonlinear contribution accounting self-phase modulation (SPM) and the interference generated by channels "b" and "c" on channel "a" due to cross-phase modulation (XPM), while $n_k$ is additive noise. In Equation (4), the nonlinear contribution includes only the interference of channels composing the super-channel. The nonlinear interference coming from other WDM channels is modeled as additive noise as in the Gaussian noise model.

$S_{m,n,l}$ is responsible for intra-channel nonlinear effect, while $X_{m,n,l}^{(ab)}$ and $X_{m,n,l}^{(ac)}$ account for XPM between channel "a" and channels "b" and "c", respectively, and they can be calculated as:

$$\mathbf{S}_{m,n,l} = \int_0^L \mathrm{d}z\, f(z)\int \mathrm{d}t\, g^{*}(z,t)g(z,t-mT)g(z,t-nT)g^{*}(z,t-lT)$$

$$\mathbf{X}_{m,n,l}^{(ab)} = \int_0^L \mathrm{d}z\, f(z)\int \mathrm{d}t\, g^{*}(z,t)g(z,t-mT)g(z,t-nT-\beta^{"}\Omega z)g^{*}(z,t-lT-\beta^{"}\Omega z)$$

$$\mathbf{X}_{m,n,l}^{(ac)} = \int_0^L \mathrm{d}z\, f(z)\int \mathrm{d}t\, g^{*}(z,t)g(z,t-mT)g(z,t-nT+\beta^{"}\Omega z)g^{*}(z,t-lT+\beta^{"}\Omega z)$$

(4a)

In order to derive a multi-channel equalization algorithm, it is worth to re-arrange Equation (4) expressing the channel model as a time-varying inter-symbol interference (ISI) channel:

$$\mathbf{r}_k = \mathbf{a}_k + \sum_m \mathbf{H}_m^{(k)}\mathbf{a}_{k-m} + \mathbf{n}_k$$

where $\mathbf{H}_m^{(k)}$ is the nonlinear channel response defined as

$$\mathbf{H}_m^{(k)} = \begin{bmatrix} h_{11} & h_{12} \\ h_{21} & h_{22} \end{bmatrix}$$

$$h_{11} = \sum_{n,l} \left[ \mathbf{S}_{m,n,l} \left( a x_{k-n} a x_{k-l}^* + a y_{k-n} a y_{k-l}^* \right) + \mathbf{X}_{m,n,l}^{(ab)} \left( 2 b x_{k-n} b x_{k-l}^* + b y_{k-n} b y_{k-l}^* \right) + \mathbf{X}_{m,n,l}^{(ac)} \left( 2 c x_{k-n} c x_{k-l}^* + c y_{k-n} c y_{k-l}^* \right) \right]$$

$$h_{12} = \sum_{n,l} \mathbf{X}_{m,n,l}^{(ab)} b x_{k-n} b y_{k-l}^* + \sum_{n,l} \mathbf{X}_{m,n,l}^{(ac)} c x_{k-n} c y_{k-l}^*$$

$$h_{21} = \sum_{n,l} \mathbf{X}_{m,n,l}^{(ab)} b y_{k-n} b x_{k-l}^* + \sum_{n,l} \mathbf{X}_{m,n,l}^{(ac)} c y_{k-n} c x_{k-l}^*$$

$$h_{22} = \sum_{n,l} \left[ \mathbf{S}_{m,n,l} \left( a x_{k-n} a x_{k-l}^* + a y_{k-n} a y_{k-l}^* \right) + \mathbf{X}_{m,n,l}^{(ab)} \left( 2 b y_{k-n} b y_{k-l}^* + b x_{k-n} b x_{k-l}^* \right) + \mathbf{X}_{m,n,l}^{(ac)} \left( 2 c y_{k-n} c y_{k-l}^* + c x_{k-n} c x_{k-l}^* \right) \right]$$

$$(5)$$

The nonlinear channel response $\mathbf{H}_m^{(k)}$ involves only symbols transmitted in channel "a" and in the interfering channels "b" and "c". Thus, it can be removed by performing joint equalization as

$$\mathbf{r}_{eq,k} = \mathbf{r}_k - \Delta \mathbf{r}_k = \mathbf{r}_k - \sum_m \hat{\mathbf{H}}_m^{(k)} \mathbf{r}_{k-m} \quad (6)$$

where $\hat{\mathbf{H}}_m^{(k)}$ is calculated from Equation (5), using the transmitted symbols or the received samples on each of the three channels. Perturbation 3-D matrixes $S_{m,n,l}$, $\mathbf{X}_{m,n,l}^{(ab)}$ and $\mathbf{X}_{m,n,l}^{(ac)}$ can be calculated by offline computation or estimated at the receiver side.

However, the computation of Equation (6) is computationally expensive for a real scenario. Accordingly, an approximated model is considered. To reduce the complexity of the intra-channel equalization scheme, a temporal pulse matching condition is used. The same condition is applied to the model expressed in Equation (4). Assuming that $l = m + n$, and considering only the interference between channels "a" and "b", it is obtained:

$$\Delta \mathbf{a}_k = \sum_{m,n} \mathbf{C}_{m,n} \mathbf{a}_{k-m-n}^H \mathbf{a}_{k-n} \mathbf{a}_{k-m} + \sum_{m,n} \mathbf{D}_{m,n}^{(ab)} \left( \mathbf{b}_{k-m-n}^H \mathbf{b}_{k-n} \mathbf{I} + \mathbf{b}_{k-n} \mathbf{b}_{k-m-n}^H \right) \mathbf{a}_{k-m} \quad (6)$$

where perturbation matrixes $C_{m,n} = S_{m,n,m+n}$ and $\mathbf{D}_{m,n}^{(ab)} = \mathbf{X}_{m,n,m+n}^{(ab)}$ are expressed as

$$\mathbf{C}_{m,n} = \int_0^L dz\, f(z) \int dt\, g^*(z,t) g(z,t-mT) g(z,t-nT) g^*(z,t-(m+n)T) \quad (6a)$$

$$\mathbf{D}_{m,n}^{(ab)} = \int_0^L dz\, f(z) \int dt\, g^*(z,t) g(z,t-mT) g(z,t-nT-\beta''\Omega z) g^*(z,t-(m+n)T-\beta''\Omega z) \quad (6b)$$

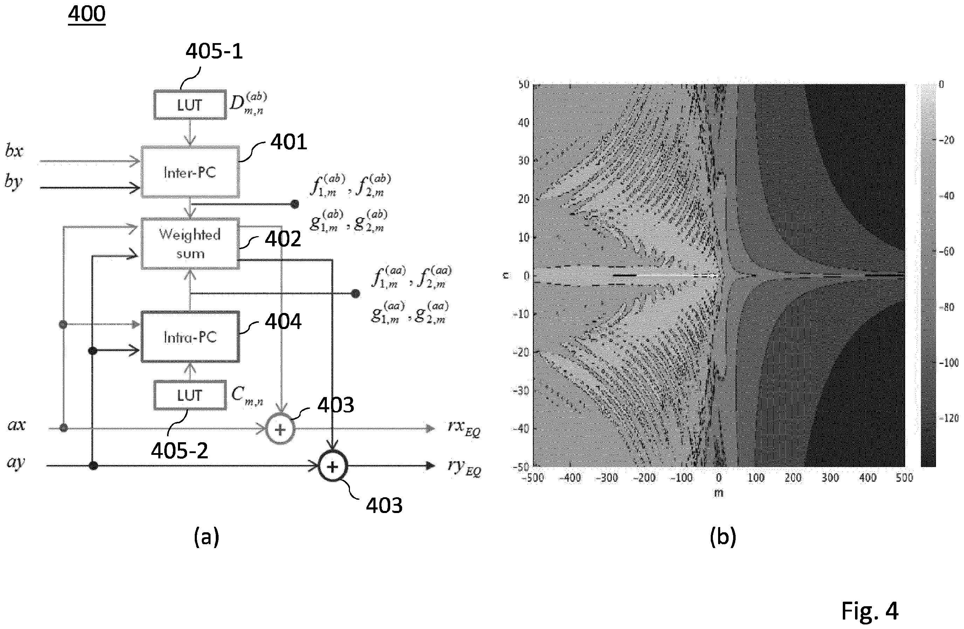

An example of the magnitudes of the coefficients $C_{m,n}$ and $D_{m,n}$ for a link configuration are illustrated in Fig. 2 and Fig. 4(b), respectively. The nonlinear channel response matrix elements can be expressed as:

$$h_{11} = \sum_n \left[ \mathbf{C}_{m,n} \left( a x_{k-n} a x_{k-m-n}^* + a y_{k-n} a y_{k-m-n}^* \right) + \mathbf{D}_{m,n}^{(ab)} \left( 2 b x_{k-n} b x_{k-m-n}^* + b y_{k-n} b y_{k-m-n}^* \right) + \mathbf{D}_{m,n}^{(ac)} \left( 2 c x_{k-n} c x_{k-m-n}^* + c y_{k-n} c y_{k-m-n}^* \right) \right]$$

$$h_{12} = \sum_n \mathbf{D}_{m,n}^{(ab)} b x_{k-n} b y_{k-m-n}^* + \sum_n \mathbf{D}_{m,n}^{(ac)} c x_{k-n} c y_{k-m-n}^*$$

$$h_{21} = \sum_n \mathbf{D}_{m,n}^{(ab)} b y_{k-n} b x_{k-m-n}^* + \sum_n \mathbf{D}_{m,n,l}^{(ac)} c y_{k-n} c x_{k-m-n}^*$$

$$h_{22} = \sum_n \left[ \mathbf{C}_{m,n} \left( a x_{k-n} a x_{k-m-n}^* + a y_{k-n} a y_{k-m-n}^* \right) + \mathbf{D}_{m,n}^{(ab)} \left( 2 b y_{k-n} b y_{k-m-n}^* + b x_{k-n} b x_{k-m-n}^* \right) + \mathbf{D}_{m,n}^{(ac)} \left( 2 c y_{k-n} c y_{k-m-n}^* + c x_{k-n} c x_{k-m-n}^* \right) \right]$$

$$(5)$$

which can be used for implementing equalization, given by Equation (6), with a reduced complexity.

A further optimization can be done by considering the cross-domain restriction shown in **Fig. 2(b),** achieved by reusing processing between intra- and inter-channel DSP blocks. Equation (6) can be rewritten as:

$$\Delta ax_k = \Delta ax_{k,\text{intra}} + \Delta ax_{k,\text{inter}}$$

$$\Delta ay_k = \Delta ay_{k,\text{intra}} + \Delta ay_{k,\text{inter}}$$

$$\Delta ax_{k,\text{intra}} = \sum_m ax_{k-m} \sum_n \ddot{\mathbf{C}}_{m,n}\left(2ax_{k-n}ax^*_{k-m-n} + ay_{k-n}ay^*_{k-m-n}\right) + \sum_m ay_{k-m} \sum_n \ddot{\mathbf{C}}_{m,n}ax_{k-n}ay^*_{k-m-n}$$

$$\Delta ay_{k,\text{intra}} = \sum_m ay_{k-m} \sum_n \ddot{\mathbf{C}}_{m,n}\left(2ay_{k-n}ay^*_{k-m-n} + ax_{k-n}ax^*_{k-m-n}\right) + \sum_m ax_{k-m} \sum_n \ddot{\mathbf{C}}_{m,n}ay_{k-n}ax^*_{k-m-n}$$

$$(6a)$$

$$\Delta ax_{k,\text{inter}} = \sum_m ax_{k-m} \sum_n \mathbf{D}^{(ab)}_{m,n}\left(2bx_{k-n}bx^*_{k-m-n} + by_{k-n}by^*_{k-m-n}\right) + \sum_m ay_{k-m} \sum_n \mathbf{D}^{(ab)}_{m,n}bx_{k-n}by^*_{k-m-n}$$

$$\Delta ay_{k,\text{inter}} = \sum_m ay_{k-m} \sum_n \mathbf{D}^{(ab)}_{m,n}\left(2by_{k-n}by^*_{k-m-n} + bx_{k-n}bx^*_{k-m-n}\right) + \sum_m ax_{k-m} \sum_n \mathbf{D}^{(ab)}_{m,n}by_{k-n}bx^*_{k-m-n}$$

$$(6b)$$

where $\ddot{C}_{m,n}$ can be obtained from the cross-domain restriction plotted in **Fig.** 2(b).

Using the same notation employed for explaining the PNC as above, it is possible to rewrite Equation (6) as

$$\Delta ax_{k,\text{intra}} = \sum_{m=-K1}^{K1} ax_{k-m} \sum_{n=-N}^{N} \ddot{\mathbf{C}}_{m,n}d^m_{a,k-n} + \sum_{m=-K1}^{K1} ay_{k-m} \sum_{n=-N}^{N} \ddot{\mathbf{C}}_{m,n}w^m_{a,k-n} = \sum_{m=-K1}^{K1} ax_{k-m}f^{(aa)}_{1,m} + \sum_{m=-K1}^{K1} ay_{k-m}f^{(aa)}_{2,m}$$

$$\Delta ay_{k,\text{intra}} = \sum_{m=-K1}^{K1} ay_{k-m} \sum_{n=-N}^{N} \ddot{\mathbf{C}}_{m,n}q^m_{a,k-n} + \sum_{m=-K1}^{K1} ax_{k-m} \sum_{n=-N}^{N} \ddot{\mathbf{C}}_{m,n}z^m_{a,k-n} = \sum_{m=-K1}^{K1} ay_{k-m}g^{(aa)}_{1,m} + \sum_{m=-K1}^{K1} ax_{k-m}g^{(aa)}_{2,m}$$

$$(7a)$$

$$\Delta ax_{k,\text{inter}} = \sum_{m=-K2}^{K2} ax_{k-m} \sum_{n=-N}^{N} \mathbf{D}^{(ab)}_{m,n}d^m_{b,k-n} + \sum_{m=-K2}^{K2} ay_{k-m} \sum_{n=-N}^{N} \mathbf{D}^{(ab)}_{m,n}w^m_{b,k-n} = \sum_{m=-K2}^{K2} ax_{k-m}f^{(ab)}_{1,m} + \sum_{m=-K2}^{K2} ay_{k-m}f^{(ab)}_{2,m}$$

$$\Delta ay_{k,\text{inter}} = \sum_{m=-K2}^{K2} ay_{k-m} \sum_{n=-N}^{N} \mathbf{D}^{(ab)}_{m,n}q^m_{b,k-n} + \sum_{m=-K2}^{K2} ax_{k-m} \sum_{n=-N}^{N} \mathbf{D}^{(ab)}_{m,n}z^m_{b,k-n} = \sum_{m=-K2}^{K2} ay_{k-m}g^{(ab)}_{1,m} + \sum_{m=-K2}^{K2} ax_{k-m}g^{(ab)}_{2,m}$$

$$(7b)$$

to express it as a weighted sum of digital linear filters. It should be noted that the terms $d^m_{b,k-n}$ , $w^m_{b,k-n}$ , $q^m_{b,k-n}$

and $z^m_{b,k-n}$ are common to the computation of $\Delta bx_{k,intra}$, $\Delta by_{k,intra}$, and $\Delta ax_{k,inter}$, $\Delta ax_{k,inter}$, perturbation terms. Thus, Equation (7a) and (7b) describe the equations of the proposed efficient algorithm used to perform a perturbation-based multi-channel nonlinear compensator (PMNC).

**Fig. 4(a)** schematically illustrates an example of a block diagram for PMNC according to embodiments of the disclosure. In particular, **Fig. 4(a)** presents the circuit block diagram based on the proposed algorithm as defined in Equation (6) for the computation of the perturbation terms of the reference channel (here channel "a"). It is considered the case of a super-channel constituted by 2 channels centered at $\lambda_a$ and $\lambda_b$ wavelentghs. The reference channel is the one centered in $\lambda_a$. Assuming to compensate two channels, PMNC **400** can be computed in three steps involving product calculations to obtain $d^m_{a,k-n}$ , $w^m_{a,k-n}$ , $q^m_{a,k-n}$ and $z^m_{a,k-n}$ and $d^m_{b,k-n}$ , $w^m_{b,k-n}$ , $q^m_{b,k-n}$ and $z^m_{b,k-n}$ using nonlinear operation, linearly filtering the symbols of channel "a" (which performs 4*K1+2 linear filters in parallel for intra-channel perturbation calculation) and linearly filtering the symbols of channel "b" (which performs 4*K2+2 linear filters for inter-channel), and calculating the weighted sum of the filter output.

PMNC **400** includes an inter-PC (perturbation calculating) block **401** which performs symbol processing and filtering functions as mentioned above, although in some embodiments the symbol processing and filtering functions may be performed separately by a symbol processing unit and a filtering unit, respectively. As mentioned, PMNC can be applied to a PDM signal having two polarizations (e.g. x- and γ- polarizations). Inter-PC block **401** processes the complex symbols of channel "b" (as denoted above as second complex symbols (bx, by) in two polarizations x, y) using a nonlinear operation, and subsequently linearly filters the processed second complex symbols ($d_b$, $q_b$). The inter-PC block **401** then outputs the linearly filtered second complex symbols, i.e. the second sequence of filter coefficients ($f^{(ab)}$, $g^{(ab)}$), to a weighted sum block **402** which performs the above mentioned perturbation calculating function (as being performed by a perturbation calculating unit), i.e. to generate a sequence of inter-nonlinear perturbation terms ($\Delta ax_{inter}$, $\Delta ay_{inter}$) associated with the received complex symbols of channel "a" (as denoted above as first complex symbols (ax, ay) in two polarizations x, y) based on the received first complex symbols (ax, ay) and the processed and linearly filtered second complex symbols ($f^{(ab)}$, $g^{(ab)}$). As indicated above, the sequence of the linearly filtered second complex symbols ($f^{(ab)}$, $g^{(ab)}$) may be calculated as a weighted sum of the processed second complex symbols ($d_b$, $q_b$) by using a set of filtering coefficients ($D^{(ab)}$), i.e. inter-nonlinear perturbation coefficients, as weights of the weighted sum. Based on the link configuration, the set of filtering coefficients ($D^{(ab)}$) can be predetermined/selected (e.g. based on link configuration information as graphically illustrated in **Fig. 4(b))** from a look-up table (LUT) **405-1.** PMNC **400** also includes one or more adders **403** serving as compensating unit to compensate the nonlinear distortions by subtracting the inter-nonlinear perturbation terms ($\Delta ax_{inter}$, $\Delta ay_{inter}$) from the corresponding first complex symbols (ax, ay).

PMNC **400** further includes an intra-PC (perturbation calculating) block **404** which performs symbol processing and filtering functions as mentioned above to process the first complex symbols (ax, ay) using a nonlinear operation. As indicated, the intra-PC block **404** further linearly filters the processed first complex symbols ($d_a$, $q_a$). The intra-PC block **404** then outputs the linearly filtered first complex symbols, i.e. the first sequence of filter coefficients ($f^{(aa)}$, $g^{(aa)}$), to the weighted sum block **402** to generate a sequence of intra-nonlinear perturbation terms ($\Delta ax_{intra}$, $\Delta ay_{intra}$) associated with the first complex symbols (ax, ay) based on the received first complex symbols (ax, ay) and the processed and linearly filtered first complex symbols ($f^{(aa)}$, $g^{(aa)}$). As indicated above, the sequence of the linearly filtered first complex symbols ($f^{(aa)}$, $g^{(aa)}$) may be calculated as a weighted sum of the processed first complex symbols ($d_a$, $q_a$) by using a set of filtering coefficients (C), i.e. intra-nonlinear perturbation coefficients, as weights of the weighted sum. Based on the link configuration, the set of filtering coefficients (C) can be predetermined/selected (e.g. based on link configuration information as graphically illustrated in **Fig. 2 (a), 2(b))** from a look-up table (LUT) **405-2.** The adders **403** also compensate nonlinear distortions by subtracting the intra-nonlinear perturbation terms ($\Delta ax_{intra}$, $\Delta ay_{intra}$) from the corresponding first complex symbols (ax, ay).

A similar configuration as PMNC **400** can be applied when considering $\lambda_b$ as the reference channel to compensate the intra-channel nonlinearity within $\lambda_b$ and the inter-channel nonlinearity affecting the signal at $\lambda_b$ from the signal at $\lambda_a$. As a result, PMNC **400** enables nonlinear compensation between signals with different frequencies (i.e. different WDM signals) which is more advantageous over the existing scheme proposed in EP 15306613.9 which only enables nonlinear compensation between signals with the same frequency. Besides, the proposed PMNC processes (e.g. filters) the signals/symbols at the two wavelengths $\lambda_a$, $\lambda_b$ independently and contribution between the two wavelengths is introduced by the computation of the filter coefficients (e.g. filter coefficients ($f^{(ab)}$, $g^{(ab)}$)). The proposed PMNC outperforms the existing algorithms for compensation of nonlinearity between signals at the same frequency as described in EP 15306613.9, because in the case of multiple wavelengths, the existing algorithms would require processing (filtering) to work on multiple wavelength simultaneously.

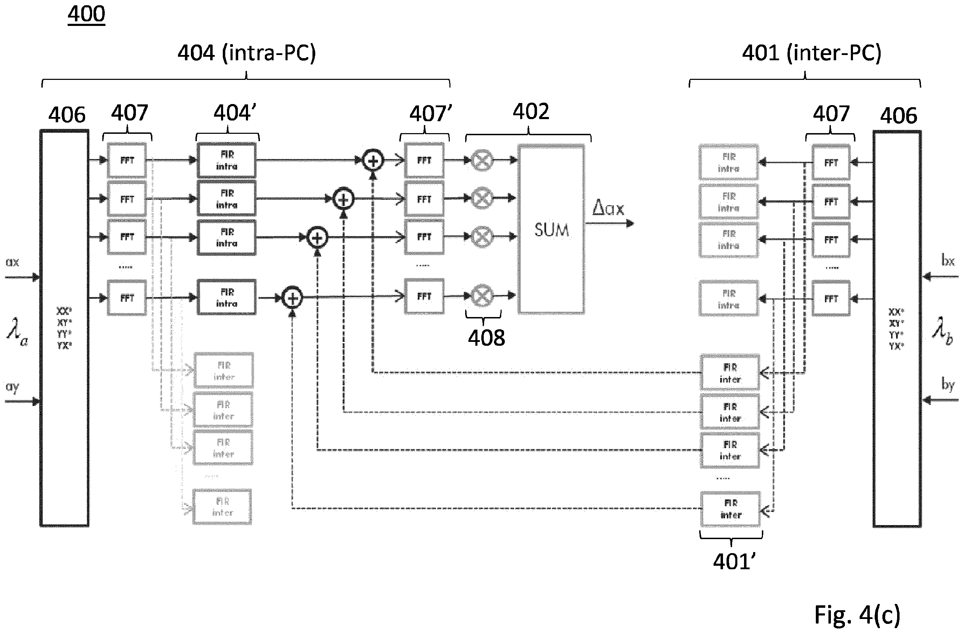

**Fig. 4(c)** schematically illustrates an example of block diagram for implementing PMNC according to embodiments of the disclosure. More specifically, the circuit of **Fig. 4(c)** can be used for computation of the perturbation terms as output from the weighted sum block **402** in PMNC of **Fig. 4(a).** The skilled person may appreciate that similar blocks (e.g. the inter-PC block **401,** the intra-PC block **404** and the weighted sum block **402**) in both **Fig. 4(a)** and **Fig. 4(c)** may perform similar functions as described above. According to **Fig. 4(c),** processing of terms in Equation (6) can be shared between intra- and inter-channel DSP blocks.

In detail, the inter-PC block **401** and the intra-PC block **404** include a symbol processing unit **406** to process the first complex symbols (ax, ay) and the second complex symbols (bx, by) using a nonlinear operation (according to Equation (6), in particular according to Equation 7(a) and Equation 7(b), i.e. $da,t = 2ax_t ax_{t-n}^* + ay_t ay_{t-n}^*$, $qa,t = 2ay_t ay_{t-n}^* + ax_t ax_{t-n}^*$, $db,t = 2bx_t bx_{t-n}^* + by_t by_{t-n}^*$, $q_{b,t} = 2by_t by_{t-n}^* + bx_t bx_{t-n}^*$, where t and n replace "k-n" and "m" in equations (6), 7(a), 7(b)).

The inter-PC block **401** also includes a FIR filter represented by inter-FIR block **401'** and the intra-PC block **404** also includes a FIR filter represented by intra-FIR block **404'.** Since the inter-PC block **401** and the intra-PC block **404** may include a FIR filter for linearly filtering the processed first complex symbols ($d_a$, $q_a$) and/or the processed second complex symbols ($d_b$, $q_b$) in the frequency domain, the inter-PC block **401** and the intra-PC block **404** may further include a fast Fourier transform (FFT) operation unit **407** which is applied to the first complex symbols and/or the second complex symbols prior to linear filtering. The inter-PC block **401** and the intra-PC block **404** may further comprise an inverse fast Fourier transform (IFFT) operation unit **407'** to be applied to the first complex symbols and/or the second complex symbols after linear filtering. Equation 7(b) may be used for computing a sequence of filter coefficients $f^{(ab)}$, $g^{(2b)}$ associated with inter-channel nonlinearity. The skilled person may appreciate that the linearly filtered first complex symbols, i.e. the first sequence of filter coefficients ($f^{(aa)}$, $g^{(aa)}$) and the linearly filtered second complex symbols, i.e. the second sequence of filter coefficients ($f^{(ab)}$, $g^{(ab)}$) may be summed up prior to applying the IFFT operation for reducing the number of FFT/IFFT operations, thereby further enhancing computational efficiency. It is noted that inter-PC block **401** in **Fig. 4(a)** may include **401', 406, 407** in **Fig. 4(b),** and intra-PC block **404** in **Fig. 4(a)** may include **404', 406, 407, 407'** in **Fig. 4(b).**

After passing the IFFT operation unit **407',** the linearly filtered first complex symbols ($f^{(aa)}$, $g^{(aa)}$) and the linearly filtered second complex symbols ($f^{(ab)}$, $g^{(ab)}$) may be processed by the weighted sum block **402** to calculate a weighted sum of the received first complex symbols (ax, ay) by using the linearly filtered first complex symbols ($f^{(aa)}$, $g^{(aa)}$) as weights of the weighted sum and to calculate a weighted sum of the received second complex symbols (bx, by) by using the linearly filtered second complex symbols ($f^{(ab)}$, $g^{(ab)}$) as weights of the weighted sum. The skilled person may also appreciate that the weighted sum block **402** of **Fig. 4(c)** comprises a multiplier **408** to multiply the linearly filtered first complex symbols ($f^{(aa)}$, $g^{(aa)}$) and the linearly filtered second complex symbols ($f^{(ab)}$, $g^{(ab)}$) with the received first complex symbols (ax, ay) and the received second complex symbols (bx, by), respectively.

As mentioned above, for the case of single-polarization transmission, $d_b$ and $q_b$ as well as $\Delta ax$ and $\Delta ay$ are computed differently from the reference equations (e.g. Equation 6 and Equation 7). In the case of single-polarization transmission, the mentioned equations (e.g. Equation 6 and Equation 7) may be modified by removing the terms referring to cross polarization.

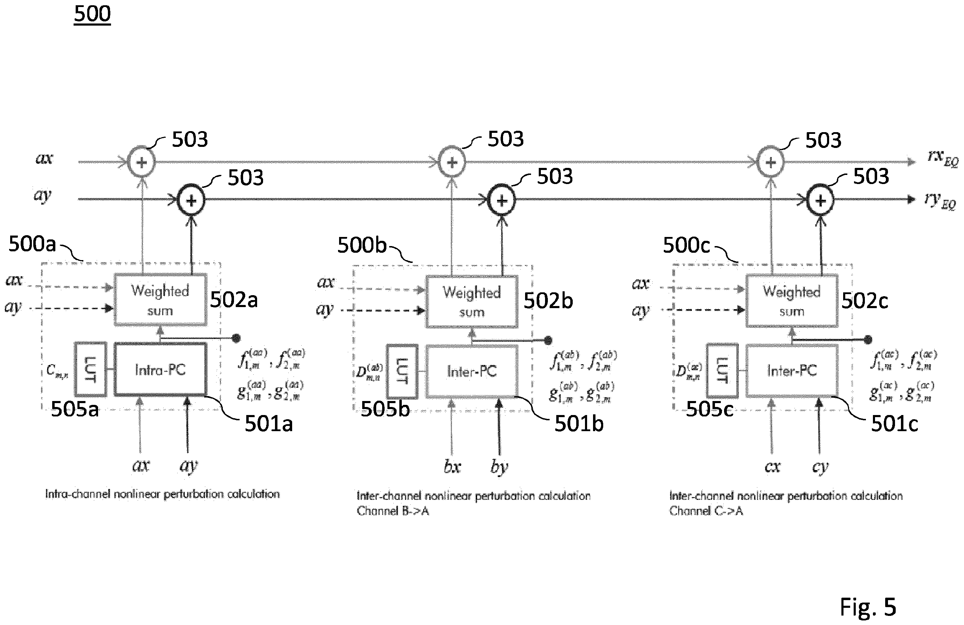

**Fig. 5** schematically illustrates an example of block diagram for PMNC according to embodiments of the disclosure. According to **Fig. 5,** PMNC **500** may be used for the case of mitigating the impact of the nonlinear noise induced by two adjacent channels to the reference channel (i.e. the inter-channel nonlinearity). PMNC **500** includes three digital processing units **500a, 500b** and **500c.** The first digital processing unit **500a** computes nonlinear noise contribution of channel "a", the second digital processing unit **500b** computes the nonlinear noise contribution of the channel "b" to channel "a" and the third digital processing unit **500c** computes the nonlinear noise contribution of the channel "c" to channel "a". The estimated nonlinear noise contribution induced by the two adjacent channels, is then removed from the reference channel "a" by adding functions (the adder **503**).

In detail, each processing unit **500a, 500b, 500c** includes a combination of digital linear filters operating (through the weighted sum blocks **502a, 502b, 502c** which perform the above mentioned "perturbation calculating" function) on channel "a" symbols. Furthermore, the filter coefficients ($f^{(aa)}$, $g^{(aa)}$) for the first processing unit are computed (through a processing block **501a** which performs nonlinear operation and linearly filtering to the channel "a" symbols) from channel "a" symbols, the filter coefficients for the second and third processing units are estimated from channel "b" and channel "c" symbols, respectively (through processing blocks **501b** and **501c** which perform nonlinear operation and linearly filtering to the channel "b" and "c" symbols, respectively). The processing blocks also utilize a LUT table **505a, 505b, 505c** used for the computation of the filter coefficients. The filter impulse response, filter coefficients and LUT tables for each processing unit are derived according to the equations as described above. Although the block diagram of **Fig. 5** is implemented for compensation of inter-channel nonlinearities caused by two neighboring channels (i.e. the nonlinear noise contribution of the channels "b" and "c" to channel "a"), the skilled person will appreciate that this setup may be extend when more than two neighboring channels are considered for inter-channel nonlinearities. Similar block diagrams can be applied for compensating of inter-channel nonlinearities caused by more than two neighboring channels.

It is therefore appreciated that the proposed PMNC can compensate inter-channel nonlinearity induced by all WDM channels (with an arbitrary number of channels N) available at the receiver. Therefore, the proposed PMNC has a modular architecture and its complexity can be adjusted by processing a part of the total available WDM channels. The main advantage of the proposed PMNC with respect to other compensation schemes is that each channel is separately processed and then information coming from each block is exchanged among channels to perform nonlinearity compensation. Although the embodiments given herein refer to analyses for two and three WDM channels, the proposed PMNC is able to compensate inter-channel nonlinearity induced by N channels available at the receiver by processing them in parallel (e.g. with one sample per symbol). Furthermore, the computational complexity and power consumption of the proposed PMNC can be adjusted.

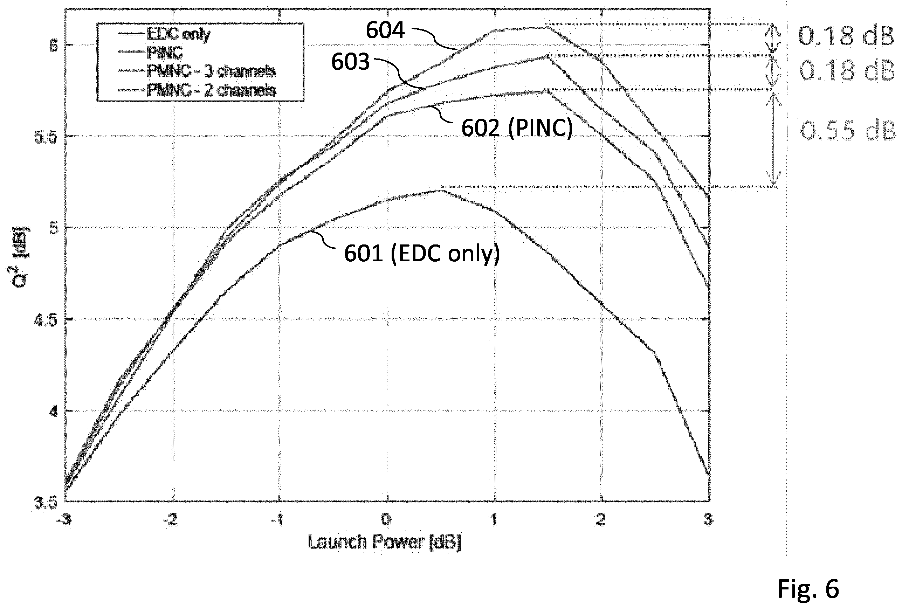

Fig. 6 graphically illustrates performance of the proposed PMNC for a dispersion-unmanaged coherent link with lumped amplification according to embodiments of the disclosure. The performance of the proposed multi-channel nonlinear equalisation scheme is assessed considering 5 WDM channels and transmitting a 32.5 Gbaud PDM 16-QAM (quadrature amplitude modulation) over a terrestrial link comprising 30 spans of 100 km of single-mode fibre (SMF) (having the dispersion coefficient D=17 ps/nm/km, the nonlinearity coefficient $\gamma$=1.27 1/W-km and the attenuation coefficient $\alpha$=0.2 dB/km) and a root-raised cosine pulse shape with a roll-off factor of 0.1. In the simulation setup, each WDM channel employs the same modulation format and baud-rate.

**EP 3 352 387 B1**

The propagation of the WDM signal is numerically performed by the SSFM. At the received side, four receivers are considered, and the corresponding numerical results are shown by curves **601, 602, 603, 604** in **Fig. 6.** The first receiver applying only electrical dispersion compensation (EDC) is able to remove only the linear impairment through an electronical dispersion compensation filter, and the corresponding result is shown by curve **601.** Curve **602** shows the result using the second receiver which applies PINC, where an intra-channel nonlinear compensation stage is added to the EDC receiver based on the algorithm proposed in EP 15306613.9. The third and fourth receiver employs the PMNC equalization scheme, assuming a compensation of 2 channels or 3 channels, respectively. The corresponding results for the third and the fourth receiver are shown by curves **603** and **604,** respectively. It is noted that employing PMNC in the considered scenario, a compensation of 3 channels over 5 WDM channels gives a gain of 0.36 dB (see the difference between curves **604** and **602**). However, if the compensation is restricted to only two channels, the gain will be reduced to 0.18 dB (see the difference between curves **603** and **602**).

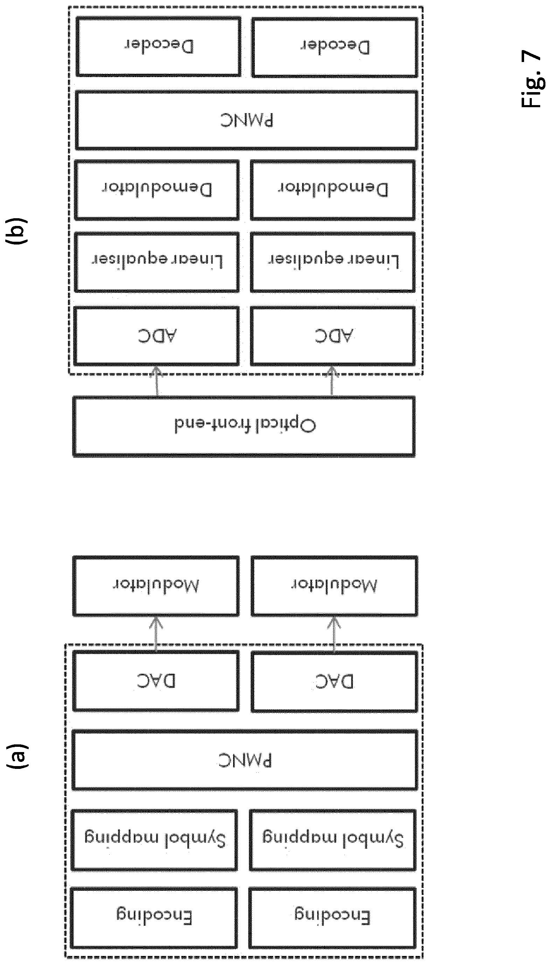

**Fig. 7(a)** and **Fig. 7(b)** schematically illustrates different embodiments that can be envisaged based on the algorithm presented in equation (6) according to embodiments of the disclosure. The embodiments may differ based on the location where nonlinear equalizer is performed in the DSP chain. For example, the nonlinear equalizer may be located in the DSP chain at the transmitter side as shown in **Fig. 7(a).** In this case, the nonlinear compensation can be implemented as signal pre-distortion at the transmitter side. In detail, the computation of the perturbation terms in the setup of **Fig. 7(a)** is based on equation (7b) and depicted in circuit block examples **Fig. 4(a)** and **Fig. 4(c).** This configuration is named pre-distortion as the transmitted signal is modulated with the inverse of the nonlinear perturbation term prior to transmission. Placing the equalizer at the transmitter has an advantage that computation of the nonlinear terms and nonlinear distortion compensation is performed in absence of amplified spontaneous emission (ASE) noise.

More specifically, **Fig. 7(a)** shows an optical transmitter TX comprising an encoding block, a symbol mapping block, a nonlinear equalizer, a digital to analog converter (DAC) and a mapper. The encoding block, the symbol mapping block and the DAC converter may respectively comprise two separate parts for performing the encoding function, the mapping function and the converting function for two polarization components separately. The encoding block receives two sequences of bits to be transmitted (one per each polarization component x, y) and encodes them, e.g. using a FEC coding algorithm. For each polarization component x, y, the symbol mapping block maps each pattern of m encoded bits into a corresponding symbol having a certain complex amplitude. The nonlinear equalizer preferably comprises the apparatus **Fig. 4(a)** or the apparatus **Fig. 4(c).** In particular, the nonlinear equalizer preferably calculates a perturbation term $\Delta ax_{inter}$, $\Delta ay_{inter}$, $\Delta ax_{intra}$, $\Delta ay_{intra}$ for each pair of symbols on the two polarization components x, y as described above and subtracts it from their complex amplitudes. This allows implementing a pre-compensation of the nonlinear distortions which the pulses carrying those symbols on the two polarizations x, y will undergo during propagation. Pre-compensating the nonlinear distortion which each pulse will undergo during propagation along the optical link advantageously allows calculating the perturbation term $\Delta ax_{inter}$, $\Delta ay_{inter}$, $\Delta ax_{intra}$, $\Delta ax_{intra}$ in absence of ASE noise. The calculation is accordingly more accurate. Subsequently, the DAC converts the pre-compensated complex amplitudes of the two symbols into an analog electric signal. The modulators use the analog, pre-compensated complex amplitudes of the two symbols for modulating the optical carrier on its two polarization components x, y. The optical signal output by the transmitter TX therefore carries two sequences of symbols as two sequences of pulses, one per each polarization component x, y.

Accordingly, the proposed circuit applies to all modulation formats with no additive computational complexity. The computation of the $C_{m,n}$ and $D_{m,n}$ coefficients are based on the transmitter information of the channel chromatic dispersion, the fiber nonlinear coefficient, the inhomogeneous span length, and the random fiber launch power, which is known a priori.

Alternatively, the nonlinear equalizer may be located in the DSP chain at the receiver side as shown in Fig. 7(b). In this case, the nonlinear compensation can be implemented as nonlinear compensation at the receiver. The computation of the perturbation terms is based on equation (7b) and depicted in circuit block examples **Fig. 4(a)** and **Fig. 4(c).** The nonlinear equalizer is placed after linear equalization and signal demodulation to ensure that computation can be performed at 1 sample per symbol. Once being computed the nonlinear terms can be directly removed from the corresponding symbol before FEC decoding (hard-decision compensation), or can be included in the computation of the symbol Log-Likelihood Ratio (LLR) required for soft-decision FEC decoding (soft-decision compensation).

In detail, **Fig. 7(b)** shows an optical coherent receiver RX comprising an optical front end, an analog to digital converter (ADC), a linear equalizer, a demodulator, a nonlinear equalizer and a decoder. Similar to **Fig. 7(a),** the ADC converter, the linear equalization block, the demodulator and the decoder may respectively comprise two separate parts for performing the linear equalization and the demodulation/decoding functions for two polarization components separately. The optical front end receives the optical signal carrying two sequences of symbols as two sequences of pulses on its two polarization components x, y and converts it into two electrical signals. The ADC converts the electrical signals in a digital format. The linear equalizer preferably compensates the distortion which the optical signal undergoes due to linear effects (chromatic dispersion, polarization mode dispersion (PMD), etc.) occurring during its propagation along the optical link. The demodulator recovers the complex amplitude of each pulse of the compensated electrical signals.

15

Furthermore, the nonlinear equalizer preferably comprises the apparatus **Fig. 4(a)** or the apparatus **Fig. 4(c).** In particular, the nonlinear equalizer preferably calculates a perturbation term $\Delta ax_{inter}$, $\Delta ay_{inter}$, $\Delta ax_{intra}$, $\Delta ay_{intra}$ for each pair of pulses on the two polarization components x, y as described above, and subtracts it from their complex amplitudes. Implementing the nonlinear equalizer after the demodulator advantageously allows calculating the perturbation term $\Delta ax_{inter}$, $\Delta ay_{inter}$, $\Delta ax_{intra}$, $\Delta ay_{intra}$ at one sample per symbol.

Subsequently, in case of hard-decision FEC decoding, the perturbation term $\Delta ax_{inter}$, $\Delta ay_{inter}$, $\Delta ax_{intra}$, $\Delta ay_{intra}$ calculated for each pair of pulses is subtracted from the complex amplitudes of the pulses before FEC decoding performed by the decoder. Otherwise, in case of soft-decision FEC decoding, the perturbation term $\Delta ax_{inter}$, $\Delta ay_{inter}$, $\Delta ax_{intra}$, $\Delta ay_{intra}$ is directly input to the decoder, which uses it in the computation of the symbol Log-Likelihood Ratio (LLR). It may be further appreciated that performing nonlinear compensation at the receiver side allows to design an adaptive equalizer which estimates the $C_{m,n}$ and $D_{m,n}$ coefficients by means of a least mean squares (LMS) algorithm.

As such, the proposed compensating apparatus can be implemented at high bit-rates in digital integrated circuit, which allows to also mitigate, in addition to intra-channel nonlinearity, inter-channel nonlinear noise which accounts for the majority of the signal-to-noise ratio (SNR) penalty due to nonlinearities in long-haul high-speed WDM transmission. Thus, the proposed apparatus outperforms the conventional digital circuits that only mitigates intra-channel (single-wavelength) nonlinear noise. By this way, the proposed compensating apparatus improves the SNR gain achievable with existing circuit for nonlinear mitigation, improving the sensitivity for Nx100Gb/s coherent transceiver of up to 0.5dB in most of the transmission scenarios. It is further appreciated that the proposed compensating apparatus allows to implement a digital circuit with comparable computational complexity with existing digital circuit for intra-channel nonlinear mitigation or order-of-magnitude simpler with respect to the conventional inter-channel nonlinear mitigation schemes.

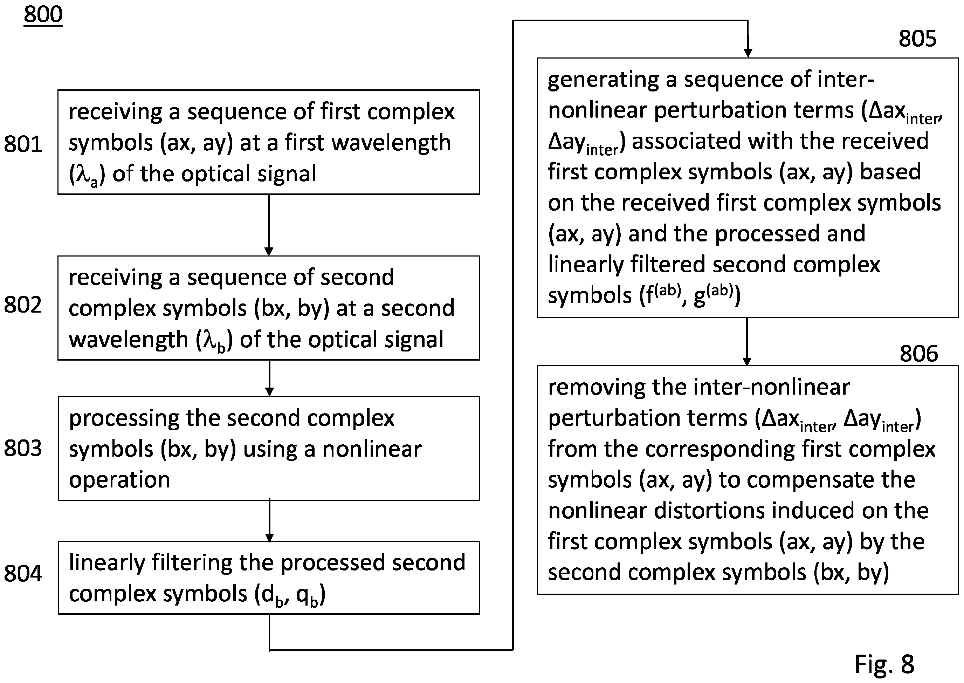

**Fig. 8** illustrates processing steps for the proposed compensating method according to embodiments of the disclosure. The method **800** can be implemented in PMNC at a transmitter or a receiver, for example, the above mentioned PMNC **400, 500.** The method **800** comprises receiving (step **801**) a sequence of first complex symbols (ax, ay) at a first wavelength ($\lambda_a$) of the optical signal. The method **800** also comprises receiving (step **802**) a sequence of second complex symbols (bx, by) at a second wavelength ($\lambda_b$) of the optical signal. The method **800** comprises processing (step **803**) the second complex symbols (bx, by) using a nonlinear operation. Thereby, processed second complex symbols ($d_b$, $q_b$) may be obtained. Furthermore, the method **800** comprises linearly filtering (step **804**) the processed second complex symbols ($d_b$, $q_b$) to produce a second sequence of filter coefficients ($f^{(ab)}$, $g^{(ab)}$) associated with inter-channel nonlinearity. The method **800** also comprises generating (step **805**) a sequence of inter-nonlinear perturbation terms ($\Delta ax_{inter}$, $\Delta ay_{inter}$) associated with the received first complex symbols (ax, ay) based on the received first complex symbols (ax, ay) and the processed and linearly filtered second complex symbols, i.e. the second sequence of filter coefficients ($f^{(ab)}$, $g^{(ab)}$). The method further comprises removing (step **806**) the inter-nonlinear perturbation terms ($\Delta ax_{inter}$, $\Delta ay_{inter}$) from the corresponding first complex symbols (ax, ay) to compensate the nonlinear distortions induced on the first complex symbols (ax, ay) by the second complex symbols (bx, by).

It should be noted that the apparatus features described above correspond to respective method features that may however not explicitly be described, for reasons of conciseness. The disclosure of the present document is considered to extend also to such method features.

Accordingly, the proposed compensating method allows to mitigate the intra-channel nonlinearity and the interfering nonlinear noise induced by the adjacent co-propagating channels on the received signal, which can be the optimal solution for dense WDM transmission.

As configured above, the proposed compensating method and apparatus provide a scheme for nonlinear compensation between signals with different frequencies (e.g. signals of N WDM channels). The proposed compensating method and apparatus extend the existing scheme described in EP 15306613.9 that only enables nonlinear compensation between two signals with the same frequency. In particular, according to the proposed compensating method and apparatus, the wavelengths are processed (filtered) independently, and contribution between the wavelengths is introduced by the computation of the filter coefficients, which does not require simultaneous processing/filtering of multiple wavelengths and thus enhances computational efficiency.

The functions of the various elements shown in **Fig. 4(a), 4(c), 5, 7(a), 7(b),** including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context. In embodiments, some of above functions may be implemented by optical signal processing.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

It should be further noted that the description and drawings merely illustrate the principles of the proposed apparatus and method. Those skilled in the art will be able to implement various arrangements that, although not explicitly described or shown herein, embody the principles of the invention and are included within its scope. Furthermore, all examples and embodiment outlined in the present document are principally intended expressly to be only for explanatory purposes to help the reader in understanding the principles of the proposed device. Furthermore, all statements herein providing principles, aspects, and embodiments of the invention, as well as specific examples thereof, are intended to encompass equivalents thereof.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

**Claims**

1. An apparatus (400) for compensating nonlinear distortions induced on an optical signal during transmission through an optical link, the apparatus comprising:

   an optical link interface configured to receive a sequence of first complex symbols (ax, ay) at a first wavelength ($\lambda_a$) of the optical signal and to receive a sequence of second complex symbols (bx, by) at a second wavelength ($\lambda_b$) of the optical signal;
   a symbol processing unit (406) configured to process the second complex symbols (bx, by) using a nonlinear operation, thereby obtaining processed second complex symbols ($d_b$, $q_b$);
   a filtering unit (401', 404') configured to linearly filter the processed second complex symbols ($d_b$, $q_b$) to produce a second sequence of filter coefficients ($f^{(ab)}$, $g^{(ab)}$) associated with inter-channel nonlinearity;
   a perturbation calculating unit (402) configured to generate a sequence of inter-nonlinear perturbation terms ($\Delta ax_{inter}$, $\Delta ay_{inter}$) associated with the received first complex symbols (ax, ay) based on the received first complex symbols (ax, ay) and the second sequence of filter coefficients ($f^{(ab)}$, $g^{(ab)}$), wherein the sequence of inter-nonlinear perturbation terms ($\Delta ax_{inter}$, $\Delta ay_{inter}$) is calculated as a weighted sum of the received first complex symbols (ax, ay) by using the second sequence of filter coefficients ($f^{(ab)}$, $g^{(ab)}$) as weights of the weighted sum; and
   a compensating unit (403) configured to remove the inter-nonlinear perturbation terms ($\Delta ax_{inter}$, $\Delta ay_{inter}$) from the corresponding first complex symbols (ax, ay) to compensate the nonlinear distortions induced on the first complex symbols (ax, ay) by the second complex symbols (bx, by).

2. The apparatus of claim 1, wherein the filtering unit (401') is configured to provide the second sequence of filter coefficients ($f^{(ab)}$, $g^{(ab)}$), wherein the second sequence of filter coefficients ($f^{(ab)}$, $g^{(ab)}$) is calculated as a weighted sum of the processed second complex symbols ($d_b$, $q_b$) by using a set of filtering coefficients ($D^{(ab)}$) as weights of the weighted sum, wherein the filtering coefficients ($D^{(ab)}$) are associated with an inter-nonlinear perturbation.

3. The apparatus of claim 2, wherein the set of filtering coefficients ($D^{(ab)}$) is provided according to a look-up table (405-1).

4. The apparatus of any of claims 1 - 3, wherein the symbol processing unit (406) is further configured to process the first complex symbols (ax, ay) using a nonlinear operation, thereby obtaining processed first complex symbols ($d_a$, $q_a$), and the filtering unit (404') is further configured to linearly filter the processed first complex symbols ($d_a$, $q_a$) to produce a first sequence of filter coefficients ($f^{(aa)}$, $g^{(aa)}$) associated with intra-channel nonlinearity, and/or wherein:

   the perturbation calculating unit (402) is further configured to generate a sequence of intra-nonlinear perturbation terms ($\Delta ax_{intra}$, $\Delta ay_{intra}$) associated with the received first complex symbols (ax, ay) based on the received first complex symbols (ax, ay) and the first sequence of filter coefficients ($f^{(aa)}$, $g^{(aa)}$); and
the compensating unit (403) is further configured to remove the intra-nonlinear perturbation terms ($\Delta ax_{intra}$, $\Delta ay_{intra}$) from the corresponding first complex symbols (ax, ay) to compensate the nonlinear distortions induced on the first complex symbols (ax, ay) by the first complex symbols (ax, ay).

5. The apparatus of claim 4, the filtering unit (404') is further configured to provide the first sequence of filter coefficients ($f^{(aa)}$, $g^{(aa)}$), wherein the first sequence of filter coefficients ($f^{(aa)}$, $g^{(aa)}$) is calculated as a weighted sum of the processed first complex symbols ($d_a$, $q_a$) by using a set of filtering coefficients (C) as weights of the weighted sum, wherein the filtering coefficients (C) are associated with an intra-nonlinear perturbation, and/or wherein the sequence of intra-nonlinear perturbation terms ($\Delta ax_{intra}$, $\Delta ay_{intra}$) is calculated as a weighted sum of the received first complex symbols (ax, ay) by using the first sequence of filter coefficients ($f^{(aa)}$, $g^{(aa)}$) as weights of the weighted sum.

6. The apparatus of any of claims 1 - 5, wherein the filtering unit (401', 404') comprises a FIR filter configured to linearly filter the processed first complex symbols ($d_a$, $q_a$) and/or the processed second complex symbols ($d_b$, $q_b$) in a frequency domain.

7. The apparatus of claim 6, wherein the filtering unit further comprises a fast Fourier transform,, FFT, operation unit (407) to be applied to the first complex symbols and/or the second complex symbols prior to linear filtering and further comprises an inverse fast Fourier transform, IFFT, operation unit (407') to be applied to the first complex symbols and/or the second complex symbols after linear filtering.

8. The apparatus of claim 7, wherein the first sequence of filter coefficients ($f^{(aa)}$, $g^{(aa)}$) and the second sequence of filter coefficients ($f^{(ab)}$), $g^{(ab)}$) are summed up prior to applying the IFFT operation.

9. The apparatus of any of claims 1 - 8, wherein the apparatus is configured to receive and process an optical polarization-division-multiplexed, PDM, signal comprising a polarization component and another polarization component, the polarization component carrying the sequence of first complex symbols (ax) at the first wavelength ($\lambda_a$) and the sequence of second complex symbols (bx) at the second wavelength ($\lambda_b$), wherein the optical link interface is configured to further receive another sequence of first complex symbols (ay) carried by the another polarization component at the first wavelength ($\lambda_a$) of the optical signal and to further receive another sequence of second complex symbols (by) carried by the another polarization component at the second wavelength ($\lambda_b$) of the optical signal, wherein:

the symbol processing unit (406) is configured to further process, using a nonlinear operation, the second complex symbols (by) carried by the another polarization component at the second wavelength of the optical signal;
the filtering unit (401') is configured to further linearly filter the processed second complex symbols ($q_b$) carried by the another polarization component at the second wavelength of the optical signal to produce another second sequence of filter coefficients ($g^{(ab)}$) associated with inter-channel nonlinearity for the another polarization component;
the perturbation calculating unit (402) is configured to further generate another sequence of inter-nonlinear perturbation terms ($\Delta ay_{inter}$) associated with the received first complex symbols (ay) of the another polarization component based on the received first complex symbols (ay) and the another second sequence of filter coefficients of the another polarization component ($g^{(ab)}$); and
the compensating unit (403) is configured to further remove the inter-nonlinear perturbation terms ($\Delta ay_{inter}$) associated with the another polarization component from the corresponding first complex symbols (ay) of the another polarization component to compensate the nonlinear distortions induced on the first complex symbols (ay) of the another polarization component by the second complex symbols (bx, by) carried by the polarization component and the another polarization component, wherein the inter-nonlinear perturbation terms ($\Delta ax_{inter}$) associated with the polarization component are removed from the corresponding first complex symbols (ax) of the polarization component to compensate the nonlinear distortions induced on the first complex symbols (ax) of the polarization component by the second complex symbols (bx) carried by the polarization component and the second complex symbols (by) carried by the another polarization component.

10. The apparatus of claim 9, wherein the symbol processing unit (406) is configured to calculate the processed second complex symbols ($d_b$, $q_b$) of the polarization component and the another polarization component by carrying out a nonlinear operation on the second complex symbols (bx, by) of the polarization component and the another polarization component, so that the processed second complex symbols ($d_b$) of the polarization component and the processed second complex symbols ($q_b$) of the another polarization component satisfy a nonlinear relationship with the second complex symbols (bx, by) as:

$$d_{b,t} = 2bx_t bx_{t-n}{}^* + by_t by_{t-n}{}^*, \quad q_{b,t} = 2by_t by_{t-n}{}^* + bx_t bx_{t-n}{}^*.$$

11. The apparatus of any of claims 1 - 10, wherein the optical link interface is further configured to receive a sequence of third complex symbols (cx, cy) at a third wavelength ($\lambda_c$) of the optical signal, wherein:

the symbol processing unit (406) is configured to further process the third complex symbols (cx, cy) using a nonlinear operation;
the filtering unit (401', 404') is configured to further linearly filter the processed third complex symbols ($d_c$, $q_c$) to produce a third sequence of filter coefficients ($f^{(ac)}$, $g^{(ac)}$) associated with inter-channel nonlinearity;
the perturbation calculating unit (402) is further configured to generate a sequence of inter-nonlinear perturbation terms ($\Delta ax_{inter}$, $\Delta ay_{inter}$) associated with the received first complex symbols (ax, ay) based on the received first complex symbols (ax, ay) and the third sequence of filter coefficients ($f^{(ac)}$, $g^{(ac)}$); and
the compensating unit (403) is further configured to remove the inter-nonlinear perturbation terms ($\Delta ax_{inter}$, $\Delta ay_{inter}$) from the corresponding first complex symbols (ax, ay) to compensate the nonlinear distortions induced on the first complex symbols (ax, ay) by the third complex symbols (cx, cy).

12. A method for compensating nonlinear distortions induced on an optical signal during transmission through an optical link, the method comprising:

receiving (801) a sequence of first complex symbols (ax, ay) at a first wavelength ($\lambda_a$) of the optical signal;
receiving (802) a sequence of second complex symbols (bx, by) at a second wavelength ($\lambda_b$) of the optical signal;
processing (803) the second complex symbols (bx, by) using a nonlinear operation, thereby obtaining processed second complex symbols ($d_b$, $q_b$);
linearly filtering (804) the processed second complex symbols ($d_b$, $q_b$) to produce a second sequence of filter coefficients ($f^{(ab)}$, $g^{(ab)}$) associated with inter-channel nonlinearity;
generating (805) a sequence of inter-nonlinear perturbation terms ($\Delta ax_{inter}$, $\Delta ay_{inter}$) associated with the received first complex symbols (ax, ay) based on the received first complex symbols (ax, ay) and the second sequence of filter coefficients ($f^{(ab)}$, $g^{(ab)}$), wherein the sequence of inter-nonlinear perturbation terms ($\Delta ax_{inter}$, $\Delta ay_{inter}$) is calculated as a weighted sum of the received first complex symbols (ax, ay) by using the second sequence of filter coefficients ($f^{(ab)}$), $g^{(ab)}$) as weights of the weighted sum; and
removing (806) the inter-nonlinear perturbation terms ($\Delta ax_{inter}$, $\Delta ay_{inter}$) from the corresponding first complex symbols (ax, ay) to compensate the nonlinear distortions induced on the first complex symbols (ax, ay) by the second complex symbols (bx, by).

13. The method of claim 12, further comprising providing the second sequence of filter coefficients ($f^{(ab)}$, $g^{(ab)}$), wherein the second sequence of filter coefficients ($f^{(ab)}$, , $g^{(ab)}$) is calculated as a weighted sum of the processed second complex symbols ($d_b$, $q_b$) by using a set of filtering coefficients ($D^{(ab)}$) as weights of the weighted sum, wherein the filtering coefficients ($D^{(ab)}$) are associated with an inter-nonlinear perturbation.

**Patentansprüche**

1. Vorrichtung (400) zum Kompensieren nichtlinearer Verzerrungen, die während der Übertragung über eine optische Verbindung in einem optischen Signal induziert werden, wobei die Vorrichtung umfasst:

eine optische Verbindungsschnittstelle zum Empfangen einer Folge von ersten komplexen Symbolen (ax, ay) mit einer ersten Wellenlänge ($\lambda_a$) des optischen Signals und zum Empfangen einer Folge von zweiten komplexen Symbolen (bx, by) mit einer zweiten Wellenlänge ($\lambda_b$) des optischen Signals;
eine Symbolverarbeitungseinheit (406) zum Verarbeiten der zweiten komplexen Symbole (bx, by) unter Verwendung einer nichtlinearen Operation, um dadurch verarbeitete zweite komplexe Symbole ($d_b$, $q_b$) zu erhalten;
eine Filtereinheit (401', 404') zum linearen Filtern der verarbeiteten zweiten komplexen Symbole ($d_b$, $q_b$), um eine zweite Folge von Filterkoeffizienten ($f^{(ab)}$, $g^{(ab)}$) zu erzeugen, die mit einer Nichtlinearität zwischen den Kanälen verknüpft sind;

eine Störungsberechnungseinheit (402) zum Erzeugen einer Folge von inter-nichtlinearen Störungstermen ($\Delta ax_{inter}$, $\Delta ay_{inter}$) , die mit den empfangenen ersten komplexen Symbolen (ax, ay) verknüpft sind, basierend auf den empfangenen ersten komplexen Symbolen (ax, ay) und der zweiten Folge von Filterkoeffizienten ($f^{(ab)}$, $g^{(ab)}$), wobei die Folge von inter-nichtlinearen Störungstermen ($\Delta ax_{inter}$, $\Delta ay_{inter}$) als eine gewichtete Summe der empfangenen ersten komplexen Symbole (ax, ay) berechnet wird, indem die zweite Folge von Filterkoeffizienten ($f^{(ab)}$, $g^{(ab)}$) als Gewichtungen der gewichteten Summe verwendet wird; und

eine Kompensationseinheit (403) zum Entfernen der inter-nichtlinearen Störungsterme ($\Delta ax_{inter}$, $\Delta ay_{inter}$) aus den entsprechenden ersten komplexen Symbolen (ax, ay), um die nichtlinearen Verzerrungen zu kompensieren, die durch die zweiten komplexen Symbole (bx, by) in den ersten komplexen Symbolen (ax, ay) induziert werden.

2. Vorrichtung nach Anspruch 1, wobei die Filtereinheit (401') dafür konfiguriert ist, die zweite Folge von Filterkoeffizienten ($f^{(ab)}$, $g^{(ab)}$) bereitzustellen, wobei die zweite Folge von Filterkoeffizienten ($f^{(ab)}$, $g^{(ab)}$) als eine gewichtete Summe der verarbeiteten zweiten komplexen Symbole ($d_b$, $q_b$) berechnet wird, indem ein Satz von Filterkoeffizienten ($D^{(ab)}$) als Gewichtungen der gewichteten Summe verwendet wird, wobei die Filterkoeffizienten ($D^{(ab)}$) mit einer inter-nichtlinearen Störung verknüpft sind.

3. Vorrichtung nach Anspruch 2, wobei der Satz von Filterkoeffizienten ($D^{(ab)}$) entsprechend einer Lookup-Tabelle (405-1) bereitgestellt wird.

4. Vorrichtung nach einem der Ansprüche von 1 bis 3, wobei die Symbolverarbeitungseinheit (406) ferner dafür konfiguriert ist, die ersten komplexen Symbole (ax, ay) unter Verwendung einer nichtlinearen Operation zu verarbeiten, wodurch verarbeitete erste komplexe Symbole ($d_a$, $q_a$) erhalten werden, und wobei die Filtereinheit (404') ferner dafür konfiguriert ist, die verarbeiteten ersten komplexen Symbole ($d_a$, $q_a$) linear zu filtern, um eine erste Folge von Filterkoeffizienten ($f^{(aa)}$, $g^{(aa)}$) zu erzeugen, die mit der Nichtlinearität zwischen den Kanälen verknüpft sind, und/oder wobei:

die Störungsberechnungseinheit (402) ferner dafür konfiguriert ist, eine Folge von intra-nichtlinearen Störungstermen ($\Delta ax_{intra}$, $\Delta ay_{intra}$) zu erzeugen, die mit den empfangenen ersten komplexen Symbolen (ax, ay) verknüpft sind, basierend auf den empfangenen ersten komplexen Symbolen (ax, ay) und der ersten Folge von Filterkoeffizienten ($f^{(aa)}$, $g^{(aa)}$); und

die Kompensationseinheit (403) ferner dafür konfiguriert ist, die intra-nichtlinearen Störungsterme ($\Delta ax_{intra}$, $\Delta ay_{intra}$) aus den entsprechenden ersten komplexen Symbolen (ax, ay) zu entfernen, um die nichtlinearen Verzerrungen zu kompensieren, die durch die ersten komplexen Symbole (ax, ay) in den ersten komplexen Symbolen (ax, ay) induziert werden.

5. Vorrichtung nach Anspruch 4, wobei die Filtereinheit (404') ferner dafür konfiguriert ist, die erste Folge von Filterkoeffizienten ($f^{(aa)}$, $g^{(aa)}$) bereitzustellen, wobei die erste Folge von Filterkoeffizienten ($f^{(aa)}$, $g^{(aa)}$) als eine gewichtete Summe der verarbeiteten ersten komplexen Symbole ($d_a$, $q_a$) berechnet wird unter Verwendung eines Satzes von Filterkoeffizienten (C) als Gewichtungen der gewichteten Summe, wobei die Filterkoeffizienten (C) mit einer intra-nichtlinearen Störung verknüpft sind, und/oder wobei die Folge von intra-nichtlinearen Störungstermen ($\Delta ax_{intra}$, $\Delta ay_{intra}$) als gewichtete Summe der empfangenen ersten komplexen Symbole (ax, ay) berechnet wird unter Verwendung der ersten Folge von Filterkoeffizienten ($f^{(aa)}$, $g^{(aa)}$) als Gewichtungen der gewichteten Summe.

6. Vorrichtung nach einem der Ansprüche 1-5, wobei die Filtereinheit (401', 404') einen FIR-Filter enthält, der dafür konfiguriert ist, die verarbeiteten ersten komplexen Symbole ($d_a$, $q_a$) und/oder die verarbeiteten zweiten komplexen Symbole ($d_b$, $q_b$) in einem Frequenzbereich linear zu filtern.

7. Vorrichtung nach Anspruch 6, wobei die Filtereinheit ferner eine Operationseinheit für schnelle-Fouriertransformation, FFT, (407) umfasst, die vor der linearen Filterung auf die ersten komplexen Symbole und/oder die zweiten komplexen Symbole anzuwenden ist, und ferner eine Operationseinheit für inverse schnelle Fouriertransformation, IFFT, (407') umfasst, die nach der linearen Filterung auf die ersten komplexen Symbole und/oder die zweiten komplexen Symbole anzuwenden ist.

8. Vorrichtung nach Anspruch 7, wobei die erste Folge von Filterkoeffizienten ($f^{(aa)}$, $g^{(aa)}$) und die zweite Folge von Filterkoeffizienten ($f^{(ab)}$, $g^{(ab)}$) vor der Anwendung der IFFT-Operation summiert werden.

9. Vorrichtung nach einem der Ansprüche 1-8, wobei die Vorrichtung dafür konfiguriert ist, ein optisches Polarisation-Division-Multiplex-, PDM, Signal zu empfangen und zu verarbeiten, das eine Polarisationskomponente und eine andere Polarisationskomponente umfasst, wobei die Polarisationskomponente die Folge von ersten komplexen Symbolen (ax) mit der ersten Wellenlänge ($\lambda_a$) und die Folge von zweiten komplexen Symbolen (bx) mit der zweiten Wellenlänge ($\lambda_b$) überträgt, wobei die optische Verbindungsschnittstelle dafür konfiguriert ist, weiter eine andere Folge von ersten komplexen Symbolen (ay) zu empfangen, die von der anderen Polarisationskomponente mit der ersten Wellenlänge ($\lambda_a$) des optischen Signals übertragen wird, und weiter eine andere Folge von zweiten komplexen Symbolen (by) zu empfangen, die von der anderen Polarisationskomponente mit der zweiten Wellenlänge ($\lambda_b$) des optischen Signals übertragen wird, wobei:

die Symbolverarbeitungseinheit (406) dafür konfiguriert ist, unter Verwendung einer nichtlinearen Operation, die zweiten komplexen Symbole (by), die von der anderen Polarisationskomponente mit der zweiten Wellenlänge des optischen Signals übertragen werden, weiterzuverarbeiten;
die Filtereinheit (401') dafür konfiguriert ist, die verarbeiteten zweiten komplexen Symbole ($q_b$), die von der anderen Polarisationskomponente mit der zweiten Wellenlänge des optischen Signals übertragen werden, weiter linear zu filtern, um eine andere zweite Folge von Filterkoeffizienten ($g^{(ab)}$) zu erzeugen, die mit der Nichtlinearität zwischen den Kanälen für die andere Polarisationskomponente verknüpft sind;
die Störungsberechnungseinheit (402) dafür konfiguriert ist, weiter eine andere Folge von inter-nichtlinearen Störungstermen ($\Delta ay_{inter}$) zu erzeugen, die mit den empfangenen ersten komplexen Symbolen (ay) der anderen Polarisationskomponente verknüpft sind, basierend auf den empfangenen ersten komplexen Symbolen (ay) und der anderen zweiten Folge von Filterkoeffizienten ($g^{(ab)}$) der anderen Polarisationskomponente; und
die Kompensationseinheit (403) dafür konfiguriert ist, weiter die mit der anderen Polarisationskomponente verknüpften inter-nichtlinearen Störungsterme ($\Delta ay_{inter}$) aus den entsprechenden ersten komplexen Symbolen (ay) der anderen Polarisationskomponente zu entfernen, um die nichtlinearen Verzerrungen zu kompensieren, die in den ersten komplexen Symbolen (ay) der anderen Polarisationskomponente durch die zweiten komplexen Symbole (bx, by) induziert werden, die von der Polarisationskomponente und der anderen Polarisationskomponente übertragen werden, wobei die mit der Polarisationskomponente verknüpften inter-nichtlinearen Störungsterme ($\Delta ax_{inter}$) aus den entsprechenden ersten komplexen Symbolen (ax) der Polarisationskomponente entfernt werden, um die nichtlinearen Verzerrungen zu kompensieren, die in den ersten komplexen Symbolen (ax) der Polarisationskomponente durch die zweiten komplexen Symbole (bx) induziert werden, die von der Polarisationskomponente übertragen werden, und den zweiten komplexen Symbolen (by) induziert werden, die von der anderen Polarisationskomponente übertragen werden.

10. Vorrichtung nach Anspruch 9, wobei die Symbolverarbeitungseinheit (406) dafür konfiguriert ist, die verarbeiteten zweiten komplexen Symbole ($d_b$, $q_b$) der Polarisationskomponente und der anderen Polarisationskomponente durch das Durchführen einer nichtlinearen Operation an den zweiten komplexen Symbolen (bx, by) der Polarisationskomponente und der anderen Polarisationskomponente zu berechnen, so dass die verarbeiteten zweiten komplexen Symbole ($d_b$) der Polarisationskomponente und die verarbeiteten zweiten komplexen Symbole ($q_b$) der anderen Polarisationskomponente einer nichtlinearen Beziehung zu den zweiten komplexen Symbolen (bx, by) genügen als:

$$d_{b,t} = 2bx_t bx_{t-n}{}^* + by_t by_{t-n}{}^*, \quad q_{b,t} = 2by_t by_{t-n}{}^* + bx_t bx_{t-n}{}^*.$$

11. Vorrichtung einem der Ansprüche 1 bis 10, wobei die optische Verbindungsschnittstelle ferner dafür konfiguriert ist, eine Folge von dritten komplexen Symbolen (cx, cy) mit einer dritten Wellenlänge ($\lambda_c$) des optischen Signals zu empfangen, wobei:

die Symbolverarbeitungseinheit (406) dafür konfiguriert ist, die dritten komplexen Symbole (cx, cy) unter Verwendung einer nichtlinearen Operation weiterzuverarbeiten;
die Filtereinheit (401', 404') dafür konfiguriert ist, die verarbeiteten dritten komplexen Symbole ($d_c$, $q_c$) weiter linear zu filtern, um eine dritte Folge von Filterkoeffizienten ($f^{(ac)}$, $g^{(ac)}$) zu erzeugen, die mit der Nichtlinearität zwischen den Kanälen verknüpft sind;
die Störungsberechnungseinheit (402) ferner dafür konfiguriert ist, eine Folge von inter-nichtlinearen Störungstermen ($\Delta ax_{inter}$, $\Delta ay_{inter}$) zu erzeugen, die mit den empfangenen ersten komplexen Symbolen (ax, ay) verknüpft sind, basierend auf den empfangenen ersten komplexen Symbolen (ax, ay) und der dritten Folge von Filterkoeffizienten ($f^{(ac)}$, $g^{(ac)}$); und
die Kompensationseinheit (403) ferner konfiguriert ist, die inter-nichtlinearen Störungsterme ($\Delta ax_{inter}$, $\Delta ay_{inter}$)

aus den entsprechenden ersten komplexen Symbolen (ax, ay) zu entfernen, um die nichtlinearen Verzerrungen zu kompensieren, die durch die dritten komplexen Symbole (cx, cy) in den ersten komplexen Symbolen (ax, ay) induziert werden.

**12.** Verfahren zum Kompensieren nichtlinearer Verzerrungen, die während der Übertragung über eine optische Verbindung in einem optischen Signal induziert werden, wobei das Verfahren umfasst:

Empfangen (801) einer Folge von ersten komplexen Symbolen (ax, ay) mit einer ersten Wellenlänge ($\lambda_a$) des optischen Signals;

Empfangen (802) einer Folge von zweiten komplexen Symbolen (bx, by) mit einer zweiten Wellenlänge ($\lambda_b$) des optischen Signals;

Verarbeiten (803) der zweiten komplexen Symbole (bx, by) unter Verwendung einer nichtlinearen Operation, um dadurch verarbeitete zweite komplexe Symbole ($d_b$, $q_b$) zu erhalten;

lineares Filtern (804) der verarbeiteten zweiten komplexen Symbole ($d_b$, $q_b$), um eine zweite Folge von Filterkoeffizienten ($f^{(ab)}$, $g^{(ab)}$) zu erzeugen, die mit einer Nichtlinearität zwischen den Kanälen verknüpft sind;

Erzeugen (805) einer Folge von inter-nichtlinearen Störungstermen ($\Delta ax_{inter}$, $\Delta ay_{inter}$), die mit den empfangenen ersten komplexen Symbolen (ax, ay) verknüpft sind, basierend auf den empfangenen ersten komplexen Symbolen (ax, ay) und der zweiten Folge von Filterkoeffizienten ($f^{(ab)}$, $g^{(ab)}$), wobei die Folge von inter-nichtlinearen Störungstermen ($\Delta ax_{inter}$, $\Delta ay_{inter}$) als eine gewichtete Summe der empfangenen ersten komplexen Symbole (ax, ay) berechnet wird, unter Verwendung der zweiten Folge von Filterkoeffizienten ($f^{(ab)}$, $g^{(ab)}$) als Gewichtungen der gewichteten Summe; und

Entfernen (806) der inter-nichtlinearen Störungsterme ($\Delta ax_{inter}$, $\Delta ay_{inter}$) aus den entsprechenden ersten komplexen Symbolen (ax, ay), um die nichtlinearen Verzerrungen zu kompensieren, die durch die zweiten komplexen Symbole (bx, by) in den ersten komplexen Symbolen (ax, ay) induziert werden.

**13.** Verfahren nach Anspruch 12, das ferner das Bereitstellen der zweiten Folge von Filterkoeffizienten ($f^{(ab)}$, $g^{(ab)}$) umfasst, wobei die zweite Folge von Filterkoeffizienten ($f^{(ab)}$, $g^{(ab)}$) als gewichtete Summe der verarbeiteten zweiten komplexen Symbole ($d_b$, $q_b$) berechnet wird, indem ein Satz von Filterkoeffizienten ($D^{(ab)}$) als Gewichtungen der gewichteten Summe verwendet wird, wobei die Filterkoeffizienten ($D^{(ab)}$) mit einer inter-nichtlinearen Störung verknüpft sind.

## Revendications

**1.** Appareil (400) destiné à compenser les distorsions non-linéaires induites sur un signal optique pendant la transmission par le biais d'une liaison optique, dans lequel l'appareil comprend :

une interface de liaison optique configurée pour recevoir une séquence de premiers symboles complexes (ax, ay) à une première longueur d'onde ($\lambda_a$) du signal optique et pour recevoir une séquence de seconds symboles complexes (bx, by) à une seconde longueur d'onde ($\lambda_b$) du signal optique ;

une unité de traitement de symboles (406) configurée pour traiter les seconds symboles complexes (bx, by) à l'aide d'une opération non-linéaire, afin d'obtenir des seconds symboles complexes traités ($d_b$, $q_b$) ;

une unité de filtrage (401', 404') configurée pour filtrer linéairement les seconds symboles complexes traités ($d_b$, $q_b$) afin de produire une seconde séquence de coefficients de filtrage ($f^{(ab)}$, $g^{(ab)}$) associés à une non-linéarité inter-canaux ;

une unité de calcul de perturbation (402) configurée pour générer une séquence de termes de perturbation inter-non-linéaire ($\Delta ax_{inter}$, $\Delta ay_{inter}$) associés aux premiers symboles complexes reçus (ax, ay) sur la base des premiers symboles complexes reçus (ax, ay) et de la seconde séquence de coefficients de filtrage ($f^{(ab)}$, $g^{(ab)}$), dans lequel la séquence de termes de perturbation inter-non-linéaire ($\Delta ax_{inter}$, $\Delta ay_{inter}$) est calculée comme une somme pondérée des premiers symboles complexes reçus (ax, ay) en utilisant la seconde séquence de coefficients de filtrage ($f^{(ab)}$, $g^{(ab)}$) en guise de pondérations de la somme pondérée ; et

une unité de compensation (403) configurée pour retirer les termes de perturbation inter-non-linéaire ($\Delta ax_{inter}$, $\Delta ay_{inter}$) des premiers symboles complexes correspondants (ax, ay) afin de compenser les distorsions non-linéaires induites sur les premiers symboles complexes (ax, ay) par les seconds symboles complexes (bx, by).

**2.** Appareil selon la revendication 1, dans lequel l'unité de filtrage (401') est configurée pour fournir la seconde séquence de coefficients de filtrage ($f^{(ab)}$, $g^{(ab)}$), dans lequel la seconde séquence de coefficients de filtrage ($f^{(ab)}$, $g^{(ab)}$) est calculée comme une somme pondérée des seconds symboles complexes traités ($d_b$, $q_b$) en utilisant un ensemble de coefficients de filtrage ($D^{(ab)}$) en guise de pondérations de la somme pondérée, dans lequel les coefficients de filtrage ($D^{(ab)}$) sont associés à une perturbation inter-non-linéaire.

3. Appareil selon la revendication 2, dans lequel l'ensemble de coefficients de filtrage ($D^{(ab)}$) est prévu selon une table de conversion (405-1).

4. Appareil selon l'une quelconque des revendications 1 à 3, dans lequel l'unité de traitement de symboles (406) est en outre configurée pour traiter les premiers symboles complexes (ax, ay) à l'aide d'une opération non-linéaire, afin d'obtenir des premiers symboles complexes traités ($d_a$, $q_a$), et l'unité de filtrage (404') est en outre configurée pour filtrer linéairement les premier symboles complexes traités ($d_a$, $q_a$) afin de produire une première séquence de coefficients de filtrage ($f^{(aa)}$, $g^{(aa)}$) associée à une non-linéarité intra-canaux, et/ou dans lequel :

l'unité de calcul de perturbation (402) est en outre configurée pour générer une séquence de termes de perturbation intra-non-linéaire ($\Delta ax_{intra}$, $\Delta ay_{intra}$) associés aux premiers symboles complexes reçus (ax, ay) sur la base des premiers symboles complexes reçus (ax, ay) et de la première séquence de coefficients de filtrage ($f^{(aa)}$, $g^{(aa)}$) ; et
l'unité de compensation (403) est en outre configurée pour retirer les termes de perturbation intra-non-linéaire ($\Delta ax_{intra}$, $\Delta ay_{intra}$) des premiers symboles complexes correspondants (ax, ay) afin de compenser les distorsions non-linéaires induites sur les premiers symboles complexes (ax, ay) par les premiers symboles complexes (ax, ay).

5. Appareil selon la revendication 4, dans lequel l'unité de filtrage (404') est en outre configurée pour fournir la première séquence de coefficients de filtrage ($f^{(aa)}$, $g^{(aa)}$), dans lequel la première séquence de coefficients de filtrage ($f^{(aa)}$, $g^{(aa)}$) est calculée comme une somme pondérée des premiers symboles complexes traités ($d_a$, $q_a$) en utilisant un ensemble de coefficients de filtrage (C) en guise de pondérations de la somme pondérée, dans lequel les coefficients de filtrage (C) sont associés à une perturbation intra-non-linéaire, et/ou
dans lequel la séquence de termes de perturbation intra-non-linéaire ($\Delta ax_{intra}$, $\Delta ay_{intra}$) est calculée comme une somme pondérée des premiers symboles complexes reçus (ax, ay) en utilisant la première séquence de coefficients de filtrage ($f^{(aa)}$, $g^{(aa)}$) en guise de pondérations de la somme pondérée.

6. Appareil selon l'une quelconque des revendications 1 à 5, dans lequel l'unité de filtrage (401', 404') comprend un filtre FIR configuré pour filtrer linéairement les premiers symboles complexes traités ($d_a$, $q_a$) et/ou les seconds symboles complexes traités ($d_b$, $q_b$) dans un domaine de fréquences.

7. Appareil selon la revendication 6, dans lequel l'unité de filtrage comprend en outre une unité d'opération de transformée de Fourier rapide, FFT, (407) à appliquer aux premiers symboles complexes et/ou aux seconds symboles complexes avant le filtrage linéaire, et comprend en outre une unité d'opération de transformée de Fourier rapide inverse, IFFT, (407') à appliquer aux premiers symboles complexes et/ou aux seconds symboles complexes après le filtrage linéaire.

8. Appareil selon la revendication 7, dans lequel la première séquence de coefficients de filtrage ($f^{(aa)}$, $g^{(aa)}$) et la seconde séquence de coefficients de filtrage ($f^{(ab)}$, $g^{(ab)}$) sont additionnées avant d'appliquer l'opération IFFT.

9. Appareil selon l'une quelconque des revendications 1 à 8, dans lequel l'appareil est configuré pour recevoir et traiter un signal optique à multiplexage par répartition de polarisation, PDM, qui comprend une composante de polarisation et une autre composante de polarisation, dans lequel la composante de polarisation achemine la séquence de premiers symboles complexes (ax) à la première longueur d'onde ($\lambda_a$) et la séquence de seconds symboles complexes (bx) à la seconde longueur d'onde ($\lambda_b$), dans lequel l'interface de liaison optique est configurée pour recevoir en outre une autre séquence de premiers symboles complexes (ay) acheminée par l'autre composante de polarisation à la première longueur d'onde ($\lambda_a$) du signal optique, et pour recevoir en outre une autre séquence de seconds symboles complexes (by) acheminée par l'autre composante de polarisation à la seconde longueur d'onde ($\lambda_b$) du signal optique, dans lequel :

l'unité de traitement de symboles (406) est configurée pour traiter en outre, à l'aide d'une opération non-linéaire, les seconds symboles complexes (by) acheminés par l'autre composante de polarisation à la seconde longueur d'onde du signal optique ;
l'unité de filtrage (401') est configurée pour en outre filtrer linéairement les seconds symboles complexes traités ($q_b$) acheminés par l'autre composante de polarisation à la seconde longueur d'onde du signal optique afin de produire une autre seconde séquence de coefficients de filtrage ($g^{(ab)}$) associés à la non-linéarité inter-canaux pour l'autre composante de polarisation ;

l'unité de calcul de perturbation (402) est configurée pour en outre générer une autre séquence de termes de perturbation inter-non-linéaire ($\Delta ay_{inter}$) associés aux premiers symboles complexes reçus (ay) de l'autre composante de polarisation sur la base des premiers symboles complexes reçus (ay) et de l'autre seconde séquence de coefficients de filtrage de l'autre composante de polarisation ($g^{(ab)}$) ; et

l'unité de compensation (403) est configurée pour en outre retirer les termes de perturbation inter-non-linéaire ($\Delta ay_{inter}$) associés à l'autre composante de polarisation des premiers symboles complexes correspondants (ay) de l'autre composante de polarisation afin de compenser les distorsions non-linéaires induites sur les premiers symboles complexes (ay) de l'autre composante de polarisation par les seconds symboles complexes (bx, by) acheminés par la composante de polarisation et l'autre composante de polarisation, dans lequel les termes de perturbation inter-non-linéaire ($\Delta ax_{inter}$) associés à la composante de polarisation sont retirés des premiers symboles complexes correspondants (ax) de la composante de polarisation afin de compenser les distorsions non-linéaires induites sur les premiers symboles complexes (ax) de la composante de polarisation par les seconds symboles complexes (bx) acheminés par la composante de polarisation et les seconds symboles complexes (by) acheminés par l'autre composante de polarisation.

10. Appareil selon la revendication 9, dans lequel l'unité de traitement de symboles (406) est configurée pour calculer les seconds symboles complexes traités ($d_b$, $q_b$) de la composante de polarisation et de l'autre composante de polarisation en effectuant une opération non-linéaire sur les seconds symboles complexes (bx, by) de la composante de polarisation et de l'autre composante de polarisation, de sorte que les seconds symboles complexes traités ($d_b$) de la composante de polarisation et les seconds symboles complexes traités ($q_b$) de l'autre composante de polarisation satisfassent une relation non-linéaire avec les seconds symboles complexes (bx, by) comme :

$$d_{b,t} = 2bx_t bx_{t-n}{}^\star + by_t by_{t-n}{}^\star, \quad q_{b,t} = 2by_t by_{t-n}{}^\star + bx_t bx_{t-n}{}^\star.$$

11. Appareil selon l'une quelconque des revendications 1 à 10, dans lequel l'interface de liaison optique est en outre configurée pour recevoir une séquence de troisièmes symboles complexes (cx, cy) à une troisième longueur d'onde ($\lambda_c$) du signal optique, dans lequel :

l'unité de traitement de symboles (406) est configurée pour en outre traiter les troisièmes symboles complexes (cx, cy) en utilisant une opération non-linéaire ;

l'unité de filtrage (401', 404') est configurée pour en outre filtrer linéairement les troisièmes symboles complexes traités ($d_c$, $q_c$) afin de produire une troisième séquence de coefficients de filtrage ($f^{(ac)}$, $g^{(ac)}$) associés à une non-linéarité inter-canaux ;

l'unité de calcul de perturbation (402) est en outre configurée pour générer une séquence de termes de perturbation inter-non-linéaire ($\Delta ax_{inter}$, $\Delta ay_{inter}$) associés aux premiers symboles complexes reçus (ax, ay) sur la base des premiers symboles complexes reçus (ax, ay) et de la troisième séquence de coefficients de filtrage ($f^{(ac)}$, $g^{(ac)}$) ; et

l'unité de compensation (403) est en outre configurée pour retirer les termes de perturbation inter-non-linéaire ($\Delta ax_{inter}$, $\Delta ay_{inter}$) des premiers symboles complexes correspondants (ax, ay) afin de compenser les distorsions non-linéaires induites sur les premiers symboles complexes (ax, ay) par les troisièmes symboles complexes (cx, cy).

12. Procédé de compensation de distorsions non-linéaires induites sur un signal optique pendant la transmission par le biais d'une liaison optique, dans lequel le procédé comprend :

la réception (801) d'une séquence de premiers symboles complexes (ax, ay) à une première longueur d'onde ($\lambda_a$) du signal optique ;

la réception (802) d'une séquence de seconds symboles complexes (bx, by) à une seconde longueur d'onde ($\lambda_b$) du signal optique ;

le traitement (803) des seconds symboles complexes (bx, by) à l'aide d'une opération non-linéaire, afin d'obtenir des seconds symboles complexes traités ($d_b$, $q_b$) ;

le filtrage linéaire (804) des seconds symboles complexes traités ($d_b$, $q_b$) afin de produire une seconde séquence de coefficients de filtrage ($f^{(ab)}$, $g^{(ab)}$) associés à une non-linéarité inter-canaux ;

la génération (805) d'une séquence de termes de perturbation inter-non-linéaire ($\Delta ax_{inter}$, $\Delta ay_{inter}$) associés aux

premiers symboles complexes reçus (ax, ay) sur la base des premiers symboles complexes reçus (ax, ay) et de la seconde séquence de coefficients de filtrage ($f^{(ab)}$, $g^{(ab)}$), dans lequel la séquence de termes de perturbation inter-non-linéaire ($\Delta ax_{inter}$, $\Delta ay_{inter}$) est calculée comme une somme pondérée des premiers symboles complexes reçus (ax, ay) en utilisant la seconde séquence de coefficients de filtrage ($f^{(ab)}$, $g^{(ab)}$) en guise de pondérations de la somme pondérée ; et

le retrait (806) des termes de perturbation inter-non-linéaire ($\Delta ax_{inter}$, $\Delta ay_{inter}$) des premiers symboles complexes correspondants (ax, ay) afin de compenser les distorsions non-linéaires induites sur les premiers symboles complexes (ax, ay) par les seconds symboles complexes (bx, by).

13. Procédé selon la revendication 12, qui comprend en outre la fourniture de la seconde séquence de coefficients de filtrage ($f^{(ab)}$, $g^{(ab)}$), dans lequel la seconde séquence de coefficients de filtrage ($f^{(ab)}$, $g^{(ab)}$) est calculée comme une somme pondérée des seconds symboles complexes traités ($d_b$, $q_b$) en utilisant un ensemble de coefficients de filtrage ($D^{(ab)}$) en guise de pondérations de la somme pondérée, dans lequel les coefficients de filtrage ($D^{(ab)}$) sont associés à une perturbation inter-non-linéaire.

Fig. 1

Fig. 2

$\Delta_x$

$\Delta_y$

SUM

FAST FIR

FAST FIR

FAST FIR

FAST FIR

FAST FIR

FAST FIR

FAST FIR

FAST FIR

XX* XY*
YY* YX*

x

y

Fig. 3

28

400

405-1

LUT $D_{m,n}^{(ab)}$

401

$bx$

$by$

Inter-PC

$f_{1,m}^{(ab)}, f_{2,m}^{(ab)}$

$g_{1,m}^{(ab)}, g_{2,m}^{(ab)}$

Weighted sum

402

$f_{1,m}^{(aa)}, f_{2,m}^{(aa)}$

$g_{1,m}^{(aa)}, g_{2,m}^{(aa)}$

404

Intra-PC

LUT $C_{m,n}$

403

$ax$

$rx_{EQ}$

405-2

$ay$

$ry_{EQ}$

403

(a)

(b)

Fig. 4

EP 3 352 387 B1

Fig. 4(c)

Intra-channel nonlinear perturbation calculation

Inter-channel nonlinear perturbation calculation
Channel B->A

Inter-channel nonlinear perturbation calculation
Channel C->A

Fig. 5

EP 3 352 387 B1

Fig. 6

Fig. 7

800

| 801 | receiving a sequence of first complex symbols (ax, ay) at a first wavelength ($\lambda_a$) of the optical signal |

| 802 | receiving a sequence of second complex symbols (bx, by) at a second wavelength ($\lambda_b$) of the optical signal |

| 803 | processing the second complex symbols (bx, by) using a nonlinear operation |

| 804 | linearly filtering the processed second complex symbols ($d_b$, $q_b$) |

805

generating a sequence of inter-nonlinear perturbation terms ($\Delta ax_{inter}$, $\Delta ay_{inter}$) associated with the received first complex symbols (ax, ay) based on the received first complex symbols (ax, ay) and the processed and linearly filtered second complex symbols ($f^{(ab)}$, $g^{(ab)}$)

806

removing the inter-nonlinear perturbation terms ($\Delta ax_{inter}$, $\Delta ay_{inter}$) from the corresponding first complex symbols (ax, ay) to compensate the nonlinear distortions induced on the first complex symbols (ax, ay) by the second complex symbols (bx, by)

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3096470 A1
- US 20150071652 A1
- EP 15306613